# EUROPEAN PATENT SPECIFICATION

(11) **EP 4 352 558 B1**
(45) Date of publication and mention of the grant of the patent: **15.07.2026**
(21) Application number: 22805619.8
(22) Date of filing: 20.05.2022
(51) Int. Cl.: G02B 6/38, G02B 6/44, G02B 6/50, G02B 6/52

(54) **FIBER OPTIC CONNECTOR WITH INTEGRATED REAR FIBER TUBE**
FASEROPTISCHER VERBINDER MIT INTEGRIERTEM HINTEREM FASERROHR
CONNECTEUR DE FIBRE OPTIQUE AVEC TUBE DE FIBRE ARRIÈRE INTÉGRÉ

(30) Priority: 21.05.2021 US 202163191747 P; 30.08.2021 US 202163238768 P; 10.11.2021 US 202163278084 P; 13.05.2022 US 202263341742 P
(43) Date of publication of application: 17.04.2024
(73) Proprietor: CommScope Technologies LLC, Hickory, NC 28602 (US)
(72) Inventor: DIEPSTRATEN, Patrick Jacques Ann, Hickory, North Carolina 28602 (US); LU, Yu, Hickory, North Carolina 28602 (US); MERRICK, Levi T., Hickory, North Carolina 28602 (US)
(74) Representative: Murgitroyd & Company
(86) International application number: PCT/US2022/030339
(87) International publication number: WO 2022/246255

(56) References cited:
- US-A1- 2012 222 301
- US-A1- 2019 033 532
- US-A1- 2020 012 063
- US-A1- 2020 310 043
- US-A1- 2020 393 627
- US-A1- 2021 003 788
- US-A1- 2021 003 801
- US-A1- 2021 041 635
- US-B2- 10 895 698

## Description

### Cross-Reference to Related Applications

This application is being filed on May 20, 2022 as a PCT International Patent Application and claims the benefit of U.S. Patent Application Serial No. 63/191,747, filed on May 21, 2021, claims the benefit of U.S. Patent Application Serial No. 63/238,768, filed on August 30, 2021, claims the benefit of U.S. Patent Application Serial No. 63/278,084, filed on November 10, 2021 and claims the benefit of U.S. Patent Application Serial No. 63/341,742, filed on May 13, 2022.

### Technical Field

The present disclosure relates to fiber optic data transmission, and more particularly to fiber optic cable connection systems.

### Background

Fiber optic cable connection systems are used to facilitate connecting and disconnecting fiber optic cables in the field without requiring a splice. A typical fiber optic cable connection system for interconnecting two fiber optic cables includes fiber optic connectors mounted at the ends of the fiber optic cables, and a fiber optic adapter for mechanically and optically coupling the fiber optic connectors together. Fiber optic connectors generally include ferrules that support the ends of the optical fibers of the fiber optic cables. The end faces of the ferrules are typically polished and are often angled. The fiber optic adapter includes co-axially aligned ports (i.e., receptacles) for receiving the fiber optic connectors desired to be interconnected. The fiber optic adapter includes an internal sleeve that receives and aligns the ferrules of the fiber optic connectors when the connectors are inserted within the ports of the fiber optic adapter. With the ferrules and their associated fibers aligned within the sleeve of the fiber optic adapter, a fiber optic signal can pass from one fiber to the next. The adapter also typically has a mechanical fastening arrangement (e.g., a snap-fit arrangement) for mechanically retaining the fiber optic connectors within the adapter. Examples of existing fiber optic connection systems are described at U.S. Patent Nos. 6,579,014, 6,648,520, and 6,899,467.

Hardened (e.g., ruggedized) fiber optic connection systems are often used for outside environments. Hardened fiber optic connection systems are typically environmentally sealed and include robust connection interfaces capable of accommodating relatively large pulling loads. A typical hardened connector includes a twist-to-lock fastener (e.g., a threaded fastener, a bayonet type fastener or like fastener) that engages a mating twist-to-lock interface defined by a corresponding hardened fiber optic adapter to securely retain the hardened connector within the hardened adapter. Example hardened connection systems are disclosed by U.S. Patent Nos. 7,572,065; 7,744,288; and 7,090,406. Typical hardened fiber optic connectors are typically more bulky and robust than their non-hardened counterparts.

When installing a fiber optic network, it is often desired to route fiber optic cable through conduits (e.g., underground tubes, tubes in buildings, etc.). It is also desirable to use pre-terminated ferules on the optical fibers of fiber optic cables so that termination operations can be efficiently and precisely performed in a factory environment rather than being performed in the field. Example systems having fiber optic cables with pre-terminated ferrules are disclosed by U.S. Patent Nos. 10,895,6989; 10,591,678; and 10,976,500.

US 2020/012063 discloses a system and method for deploying optical fiber according to the state of the art.

### Summary of the Disclosure

One aspect of the present disclosure relates to a fiber optic connector body adapted to receive a ferrule assembly terminating an optical fiber. In one example, the ferrule assembly is loaded into the connector body after the optical fiber and the ferrule assembly have been routed through a fiber tube. In certain examples, the ferrule assembly is loadable into the fiber optic connector body through a rear end of the fiber optic connector body. In a preferred example, a fiber tube is integrated with the rear end of the connector body and is configured such that the ferrule assembly can be inserted into the connector body through the fiber tube. In certain examples, the fiber tube is anchored and sealed relative to the rear end of the connector body prior to the connector body being used in the field (e.g., at the factory). In certain examples, the fiber tube is configured to be cut to a desired length in the field. In certain examples, a free end of the integrated fiber tube is configured to be coupled to a free end of the fiber tube through which the optical fiber and the ferrule assembly have been routed.

Another aspect of the present disclosure relates to a system for deploying optical fiber through a first fiber tube having a first end and an opposite second end. The system includes an optical fiber having a ferrulized end at which a ferrule assembly is secured. The optical fiber is coiled on a spool and the ferrulized end is configured to be routed through the first fiber tube in a direction from the first end to the second end of the fiber tube. The ferrule assembly is adapted to be incorporated as part of a fiber optic connector after the ferrulized end of the optical fiber has been routed through the first fiber tube. The fiber optic connector includes a connector body having a front end and a rear end. The fiber optic connector includes a second fiber tube that project outwardly from the rear end of the connector body. The second fiber tube includes a front end anchored and sealed with respect to the connector body and a rear end positioned rearward of the rear end of the connector body. The ferrulized end of the optical fiber is insertable through the second fiber tube and the connector body in a forward direction extending from the rear end of the connector body toward the front end of the connector body. The ferrule assembly is mountable adjacent the front end of the connector body upon insertion of the ferrule assembly forwardly through the second fiber tube and the connector body. The system also includes a tube coupler for coupling the second end of the first fiber tube to the rear end of the second fiber tube after the ferrulized end of the optical fiber has been inserted through the second fiber tube.

Another aspect of the present disclosure relates to a method for deploying optical fiber through a first fiber tube having a first end and an opposite second end. The first fiber tube is pre-installed underground to provide a fiber routing path between a first location and a second location. The method includes routing an optical fiber having a ferrule assembly at one end through the first fiber tube in a direction from the first end to the second end of the fiber tube. The method also includes incorporating the ferrule assembly as part of a fiber optic connector after the ferrule assembly and its corresponding optical fiber have been routed through the first fiber tube. The fiber optic connector includes a connector body having a front end and a rear end. The fiber optic connector includes a second fiber tube that projects rearwardly from the rear end of the connector body. The second fiber tube includes a front end anchored and sealed with respect to the connector body and a rear end positioned rearward of the rear end of the connector body. The ferrule assembly is installed within the connector body by inserting the ferrule assembly through the second fiber tube and the connector body in a forward direction extending from the rear end of the connector body toward the front end of the connector body. The ferrule assembly is secured adjacent the front end of the connector body upon insertion of the ferrule assembly forwardly through the second fiber tube and the connector body. The method further includes coupling the second end of the first fiber tube to the rear end of the second fiber tube after the ferrule assembly has been inserted through the second fiber tube. The first and second fiber tubes are coupled together by a tube coupler. In one example, the optical fiber is blown through the first fiber tube.

A variety of additional inventive aspects will be set forth in the description that follows. The inventive aspects can relate to individual features and to combinations of features. It is to be understood that both the forgoing general description and the following detailed description are exemplary and explanatory only and are not restrictive of the broad inventive concepts upon which the embodiments disclosed herein are based.

### Brief Description of the Drawings

Figure 1 schematically depicts an example environment in which fiber optic systems in accordance with the principles of the present disclosure can be deployed;
Figure 2 is a cross-sectional view of an example fiber optic connector that is part of a fiber optic system in accordance with the principles of the present disclosure;
Figure 3 depicts an example ferrule arrangement mounted on the end of an optical fiber that is coiled about a spool, the ferrule arrangement can be incorporated as part of the fiber optic connector of figure 2;
Figure 4 depicts the fiber optic connector of figure 2 with the ferrule arrangement of figure 3 incorporated therein;
Figure 5 depicts an example fiber optic adapter configured to receive the fiber optic connector of Figure 4 and also depicts outer shroud assemblies that can be mounted over the connector of Figure 4 to make the connector compatible with different types of fiber optic adapters;
Figure 6 is a cross-sectional view showing a tube anchoring arrangement for securing a fiber tube to a connector core in accordance with the principles of the present disclosure;
Figure 7 is a cross-sectional view showing another tube anchoring arrangement for securing a fiber tube to a connector core in accordance with the principles of the present disclosure;
Figure 8 is a side view of the tube anchoring arrangement of Figure 7;
Figure 9 depicts another tube anchoring arrangement in accordance with the principles of the present disclosure;
Figure 10 is a cross-sectional view of the tube anchoring arrangement of Figure 9;
Figure 11 shows a deployable assembly in accordance with the principles of the present disclosure;
Figures 12 is a cross-sectional view of a connector housing assembly adapted for use with the deployable assembly of Figure 11;

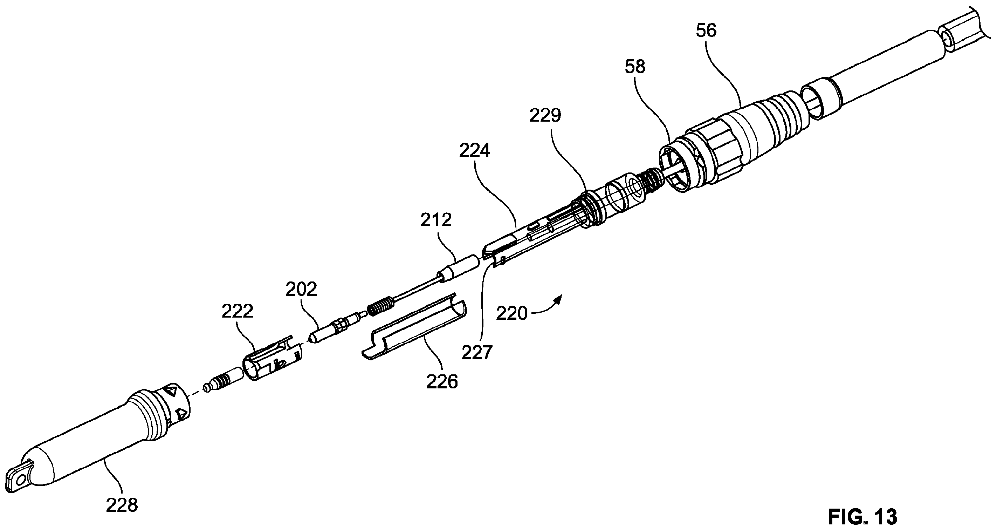

Figure 13 is an exploded view of the connector housing assembly of Figure 12;
Figures 14 is a cross-sectional view of another connector housing assembly adapted for use with the deployable assembly of Figure 11;
Figure 15 is an exploded view of the connector housing assembly of Figure 14;
Figure 16 shows another deployable assembly in accordance with the principles of the present disclosure having an integrated spring stop;
Figure 17 is a cross-sectional view of a connector housing assembly adapted for use with the deployable assembly of Figure 16;
Figure 18 is an enlarged view of a portion of Figure 17;
Figure 19 is an exploded view of the connector housing assembly of Figure 17;
Figure 20 is a cross-sectional view of another connector housing assembly adapted for use with the deployable assembly of Figure 11;
Figure 21 is a perspective view of a portion of the connector housing assembly of Figure 20;
Figure 22 is an exploded view of the connector housing assembly of Figure 20;
Figure 23 is a cross-sectional view of a further connector housing assembly adapted for use with the deployable assembly of Figure 11;
Figure 24 is an exploded view of the connector housing assembly of Figure 23;

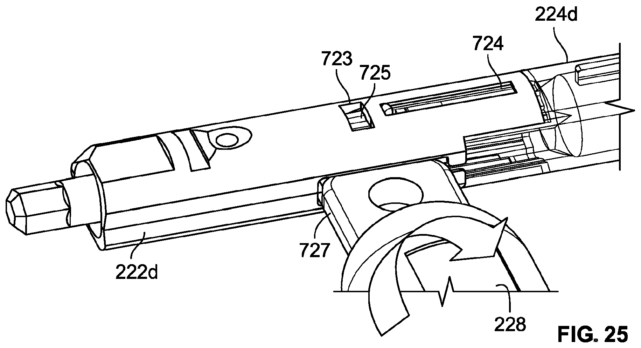

Figure 25 depicts a tool and process for dis-assembling the connector housing assembly;
Figure 26 is a cross-sectional view of the connector housing assembly of Figure 23 showing a spring stop in a non-retaining position;
Figure 27 depicts an end of the connector assembly of Figure 23 having a dust cap with a tuning mark;
Figures 28 shows the connector assembly of Figure 27 with the dust cap and ferrule turned to a tuned position;
Figure 29 depicts an interlock interface between the dust cap of Figures 27 and 28 and its corresponding ferrule hub;
Figures 30 depicts a first connector housing assemblies of the type disclosed at Figures 23-29 configured with LC front housing interfaces adapted for use with deployable assemblies including LC ferrules;
Figures 31 depicts a second connector housing assemblies of the type disclosed at Figures 23-29 configured with LC front housing interfaces adapted for use with deployable assemblies including LC ferrules;
Figures 32 depicts a third connector housing assemblies of the type disclosed at Figures 23-29 configured with LC front housing interfaces adapted for use with deployable assemblies including LC ferrules;
Figure 33 is an exploded view of a further connector housing assembly adapted for use with the deployable assembly of Figure 11;
Figure 34 is an assembled view of the connector housing assembly of Figure 33;
Figure 35 is a cross-sectional view of the connector housing assembly of Figure 33;
Figure 36 is an enlarged portion of the cross-sectional view of Figure 35;
Figure 37 is an angled view of the cross-sectional view of Figure 36;
Figure 38 is a cross-sectional view of the connector housing assembly of Figure 35;
Figure 39 is a perspective view of a barb retainer of the connector assembly of Figure 33;
Figure 40 is a side view of the barb retainer of Figure 39;

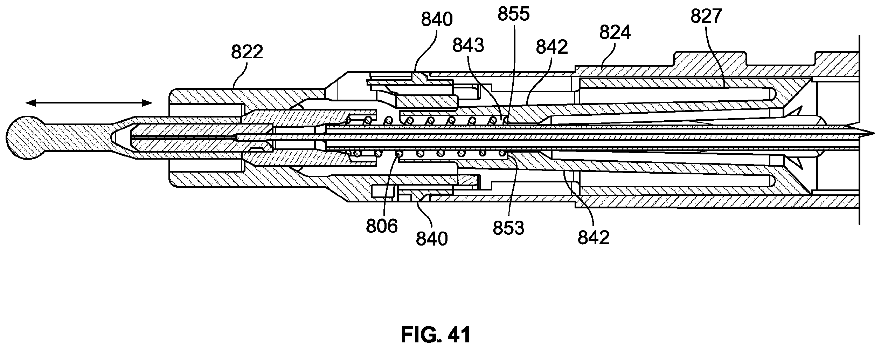

Figure 41 is a cross-sectional view of the connector housing assembly of FIG. 33;
Figure 42 is a front portion of the connector assembly of Figure 33;
Figure 43 is a front portion of the connector assembly of Figure 33;

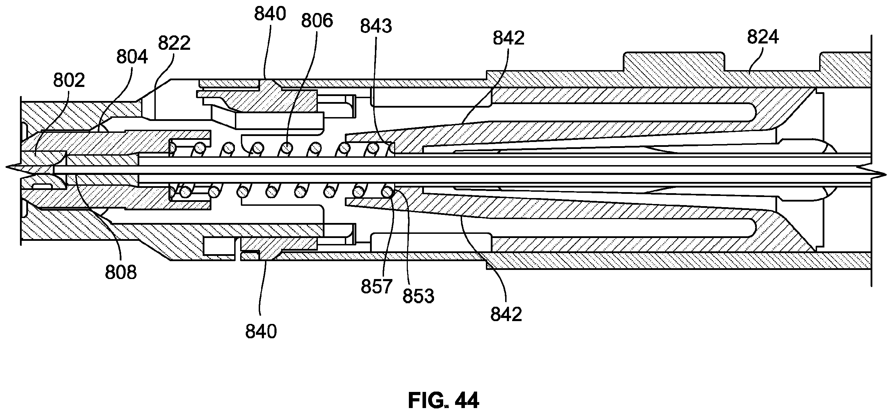

Figure 44 is a cross-sectional view of the connector housing assembly of FIG. 33;

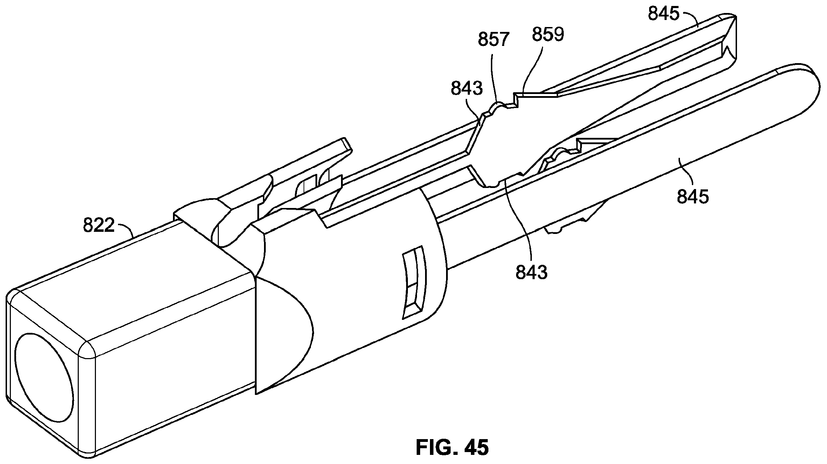

Figure 45 is a perspective view of a front housing piece the connector housing assembly of FIG. 33;

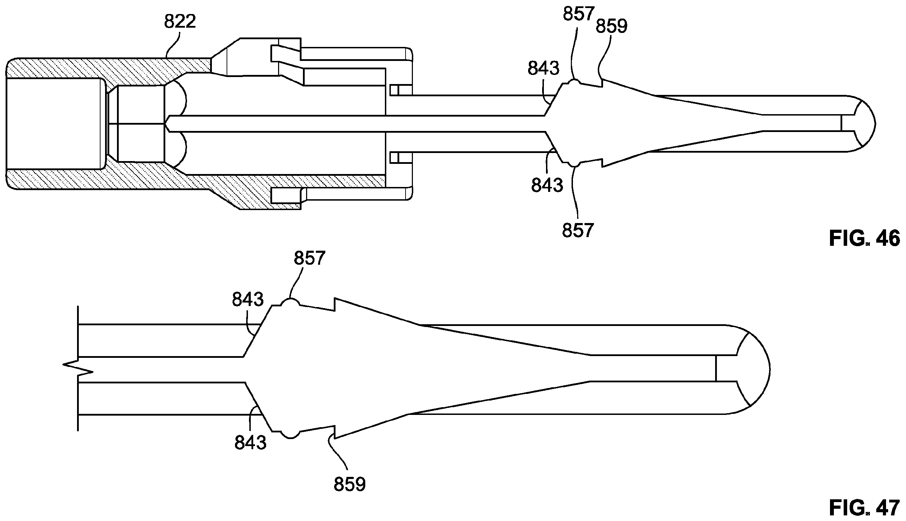

Figure 46 cross-sectional view of the front housing piece of Figure 45;
Figure 47 is an enlarged view of the cross-sectional view of Figure 46;
Figure 48 is a top view showing an interconnection between a front housing and a rear spring stop of the connector housing assembly of Figure 33;
Figure 49 shows an alternative detent arrangement for the connector assembly of Figure 33;
Figure 50 is an exploded view of a further connector housing assembly adapted for use with the deployable assembly of Figure 11;
Figure 51 is an assembled view of the connector housing assembly of Figure 50;
Figure 52 is a perspective view depicted a front housing and rear sprig stop of the connector housing assembly of Figure 50;
Figure 53 is another perspective view depicted a front housing and rear spring stop of the connector housing assembly of Figure 50;
Figure 54 depicted the front housing and the rear spring stop of the connector housing assembly of Figure 50 in the process of being latched together;
Figure 55 is an enlarged view of a portion of a connection interface between the front housing and the rear spring stop;
Figure 56 depicts the rear spring stop of the connector housing assembly of Figure 50 with the ferrule assembly installed therein;
Figure 57 depicts the rear spring stop of the connector housing assembly of Figure 50 with the ferrule assembly removed;
Figure 58 is a perspective view of rear spring stop of the connector housing assembly of Figure 50;
Figure 59 depicts an example cutout configuration usable with the connector housing assembly of Figure 50;
Figure 60 is another view of the cutout configuration of Figure 59;
Figure 61 is a cross-sectional view of the cutout configuration of Figures 59 and 60;
Figure 62 depicts an alternative cantilever latch usable with the connector housing assembly of Figure 50;
Figure 63 is another view of the cantilever latch of Figure 62;
Figure 64 depicts another latching configuration usable with the connector housing assembly of Figurer 50;
Figure 65 is an exploded view of the configuration of Figure 64; and
Figure 66 is a cross-sectional view of a different connector housing in accordance with the principles of the present disclosure.

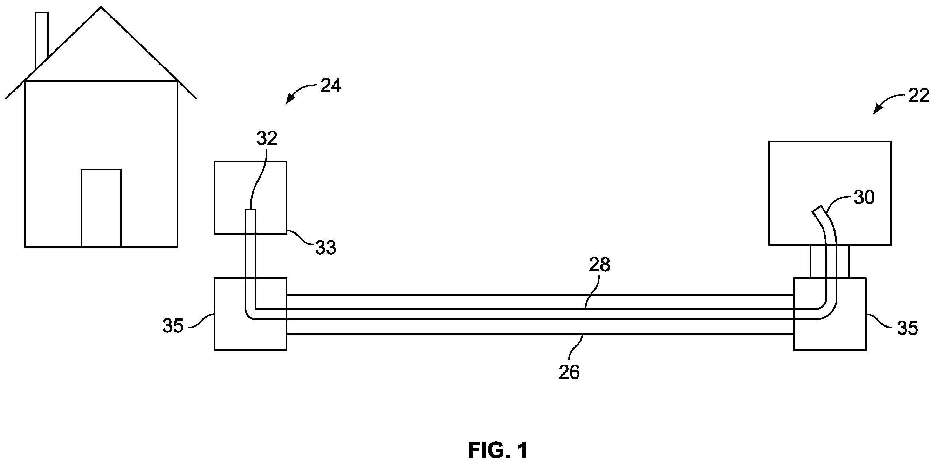

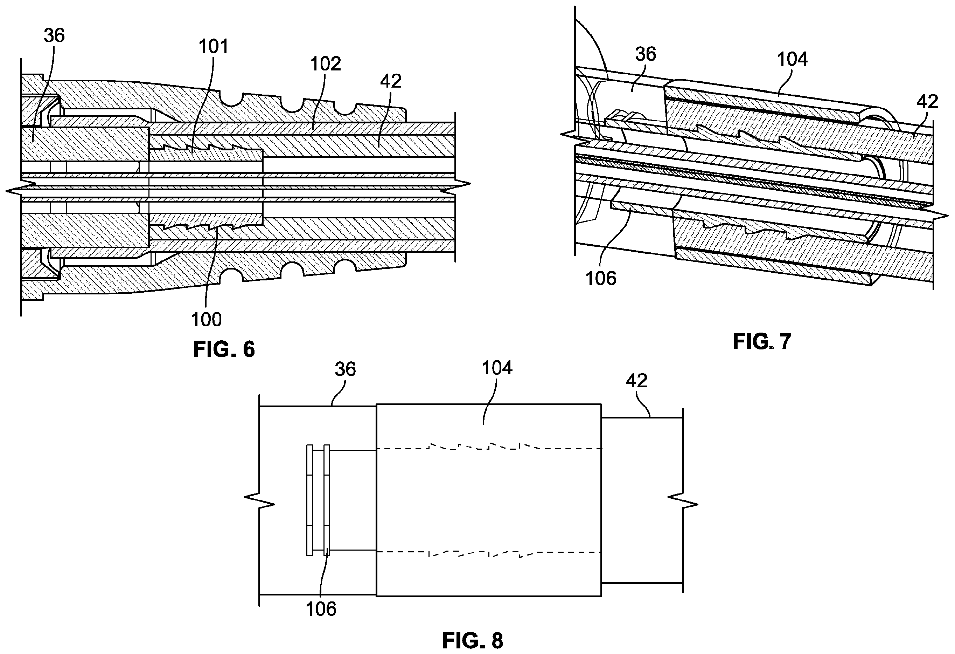

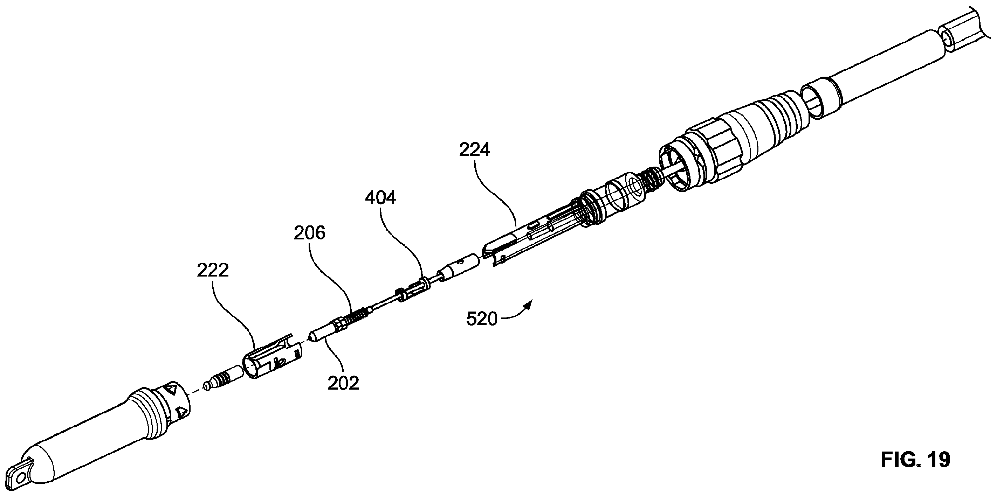

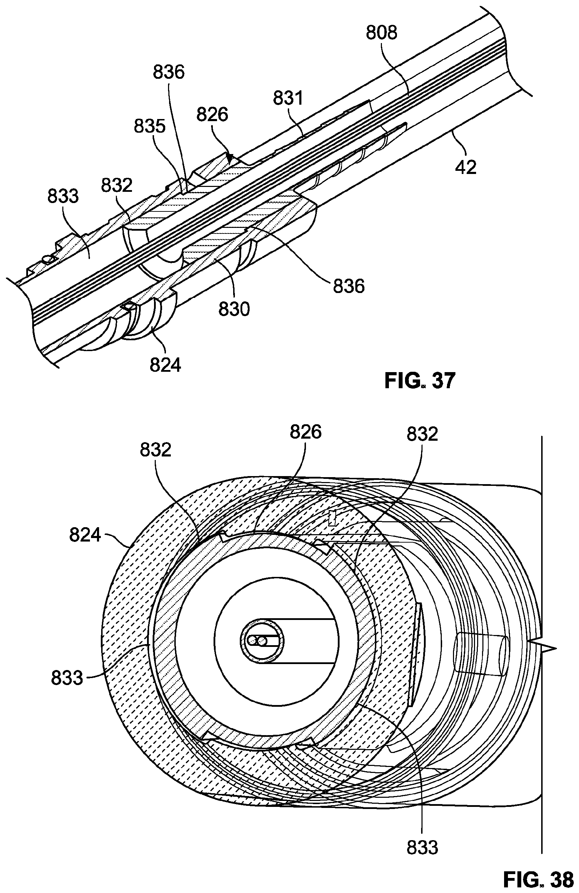

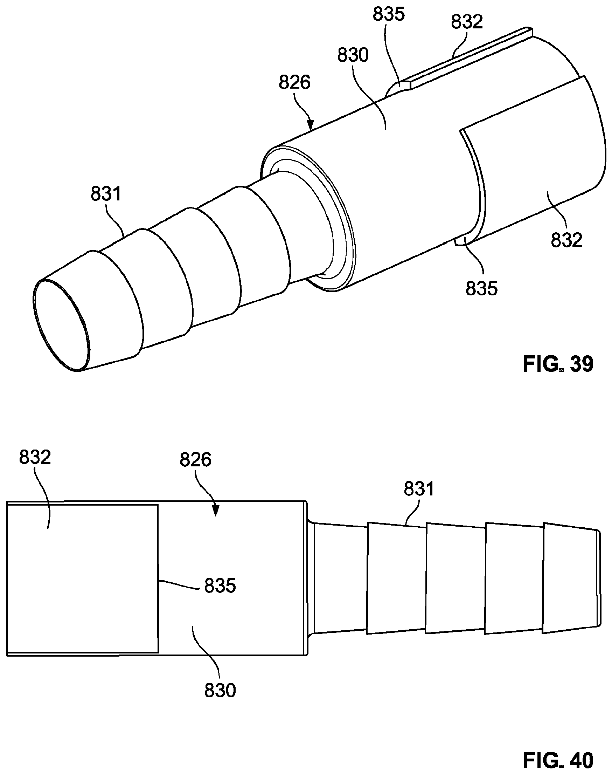

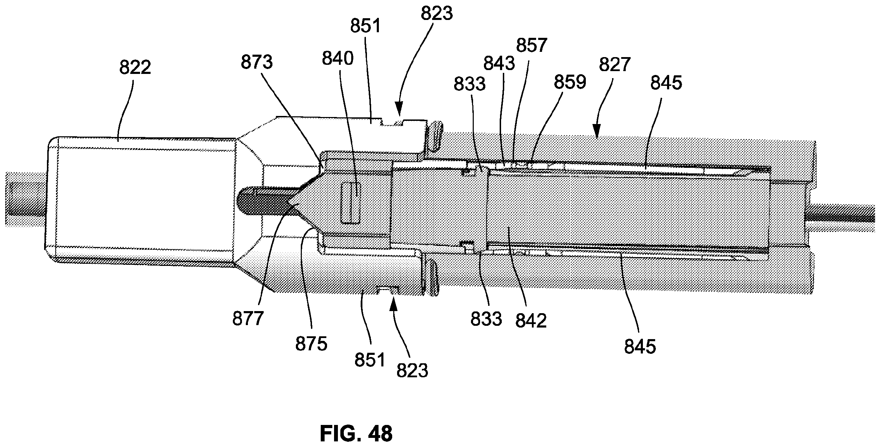

Figures 1-5 illustrate the invention as claimed. Figures 6, 9-11, 14, 15, 17, 19, 33, 36-40, 50-57 illustrate further embodiments of the invention as claimed. Figures 48, 58, 62-66 are useful to understand those embodiments. The remaining figures do not form part of the invention as claimed.

### Detailed Description

Aspects of the present disclosure relate to fiber optic systems that are factory terminated that can also be readily deployed through fiber tubes (e.g., by blowing, pushing or other means). An example system can include a factory terminated subassembly including a ferrule mounted at the terminal end of an optical fiber of a fiber optic cable. The factory terminated subassembly can also include a hub supporting the ferrule. The factory terminated subassembly can further include a spring mounted behind the ferrule hub and over the fiber optic cable. As used herein, "factory terminated" means that a ferrule is installed on a fiber of a cable at the factory. This can include direct terminations in which the optical fiber of a cable is extended continuously to the ferrule, or splice-on terminations where the ferrule supports a stub optical fiber that is spliced to the optical fiber of the fiber optic cable. The ferrule assembly can be adapted to be mounted in a connector body after deployment through a fiber tube. In one example, a fiber tube is integrated (e.g., factory integrated) with the connector body adjacent a rear end of the connector body and the ferrule assembly can be loaded into the connector body through the fiber tube. The fiber tube can be sealed and anchored (e.g., bonded, mechanically affixed, etc.) with respect to the connector body. A free end of the fiber tube is configured to be coupled to a free end of the fiber tube through which the optical fiber has been routed. A tube coupler can be used to couple the ends of the fiber tubes together in a sealed manner. The integrated fiber tube can be configured to be cut to length in the field.

Aspects of the present disclosure relate to a pre-assembled hardened connector shell that is field instable onto a pre-assembled pushable assembly core that includes at least a terminated ferrule assembly. Once the pushable assembly core is in place, after being pushed or blown through a duct or tube in the field, it is quickly inserted into the pre-assembled hardened connector shell that includes an interfacing tube or duct. The pushable assembly core is inserted through the length of the interfacing duct or tube until it reaches the ferrule interface of the hardened connector shell portion. Once it reaches this position it is quickly and easily locked into position by the technician. The ferrule, if needed, can be in-connector tuned and is now ready to use. Advantages of the pre-assembled hardened connector shell include that it includes a connector body that interfaces with a modular rear end that interfaces with different sized microducts/tubes/cable and the front-end interfaces with different connector form factors and adapter interfaces to utilize SC or LC ferrules and hardened connector intermateable profiles.

The field installation of the hardened connector shell onto the pushable ferrule core assembly is easy and quick due to the minimal assembly steps by providing pre-attached/pre-assembled components. In one example, a front portion of the shell includes a front housing that limits the frontward movement of the ferrule assembly and a rear housing that limits the backward movement of the ferrule assembly, enclosing it into an assembled configuration, ready for use. A bending cavity allows for excess fiber due to the pushing process. By utilizing the quick assembly method of field assembled connector, a technician can now utilize the small form factor of a ferrule assembly with the environmental protection of a hardened fiber optic connector.

Figure 1 depicts an example environment 20 suitable for deploying a fiber optic system in accordance with the principles of the present disclosure. The environment includes a first location 22 such as a fiber distribution cabinet (e.g., a distribution point) and a second location 24 such as a subscriber location. An underground conduit 26 is routed at least partially between the first and second locations 22, 24. The underground conduit 26 contains at least one fiber tube 28 routed through the conduit 26 between the first and second locations 22, 24. In one example, the fiber tube 28 is a blown fiber tube configured for allowing optical fibers to be blown therethrough to deploy the optical fibers. In one example fiber tube has an outer diameter of about 7 millimeters (mm) and an inner diameter of about 4 mm. In another example fiber two has an outer diameter of about 5 mm and an inner diameter of about 3 millimeters. Typically, a plurality of the fiber tubes is routed through the conduit for providing fiber optic service to different subscriber locations. The fiber tube 28 includes a first end 30 that can be accessed at the first location 22 and a second end 32 that can be accessed adjacent the second location 24. It will be appreciated that the fiber tube 28 can also be routed through or to additional structures such as enclosures/terminals 33, handholes 35, and the like.

Aspects of the present disclosure relate to a system for deploying optical fiber through a fiber tube such as the fiber tube 28 depicted at Figure 1. **In** one example, the system can be sold as a kit including a number of components sold and packaged together. The different components can include structures such as connector housing assemblies, fiber optic cable assemblies and the like. **In** one example, the different components can include a connector housing assembly, a tube coupler, a fiber optic cable coiled about a spool, and a ferrule assembly mounted on a fiber of the fiber optic cable. The ferrule assembly can be configured to be installed within the connector housing assembly after the fiber optic cable has been deployed through the fiber tube 28. The connector housing assembly can include an integrated fiber tube adapted for connection to the second end 32 of the fiber tube 28.

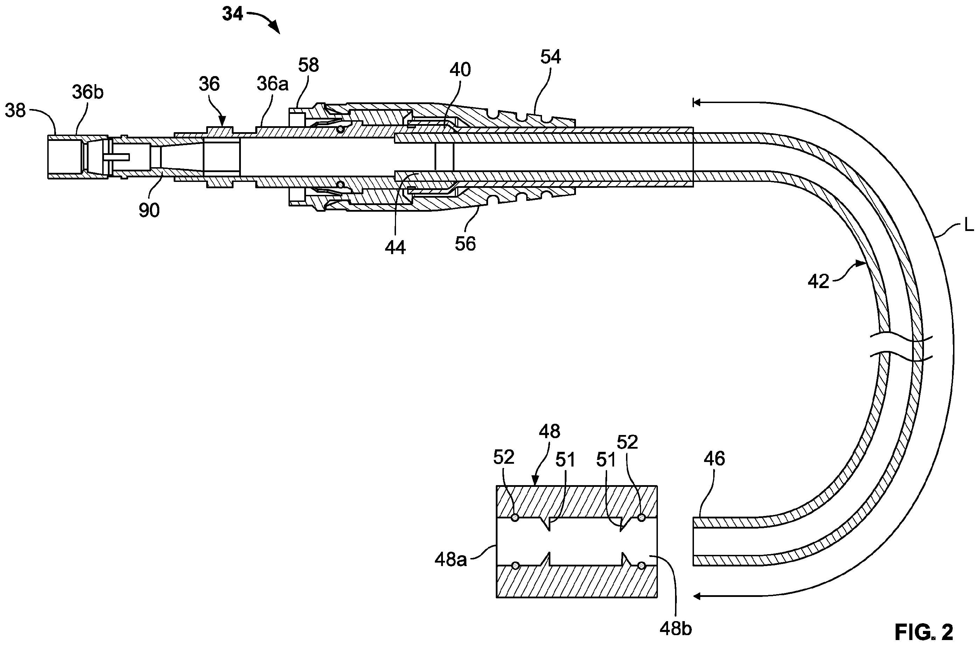

Figure 2 depicts an example connector housing assembly 34 that can be included as part of a fiber deployment kit in accordance with the principles of the present disclosure. The connector housing assembly 34 includes a connector body 36 having a front end 38 and a rear end 40. The housing assembly 34 also includes a fiber tube 42 that projects rearwardly from the rear end 40 of the connector body 36. The fiber tube 42 includes a front end 44 anchored and sealed with respect to the connector body 36 and a rear end 46 positioned rearward of the rear end 40 of the connector body 36.

The housing assembly 34 further includes a tube coupler 48 adapted for connecting the second end 32 of the fiber tube 28 to the rear end 46 of the fiber tube 42. In one example, the tube coupler 48 can include a first port 48a for receiving the fiber tube 28 and a coaxial second port 48b for receiving the rear end 46 of the fiber tube 42. Teeth or other anchoring structures 51 can be provided within the tube coupler 48 for anchoring the fiber tubes 28, 42 within the coupler 48 when the fiber tubes 28, 42 are inserted therein. Additionally, seals 52 can be provided within the tube coupler 48 for providing sealing about the fiber tubes 28, 42.

As indicated above, the fiber tube 42 is preferably coupled to the rear end 40 of the connector body 36. Preferably, the fiber tube 42 is sealed with respect to the connector body 36. In one example, the fiber tube 42 can be connected and sealed with respect to the connector body 36 by a material such as adhesive. In other examples, the fiber tube 42 can be coupled to the connector body 36 mechanically by a fastener such as a crimp ring or other mechanical fastener. In the depicted example, the fiber tube 42 is coupled to the rear end of the connector body 36 by a shape memory sleeve 54 such as a heat-shrink sleeve. In one example, the heat-shrink sleeve can include an internal layer of adhesive that bonds the heat shrink sleeve to both the exterior of the connector body 36 and the exterior of the fiber tube 42. In this way, the heat-shrink sleeve mechanically couples the fiber tube 42 to the connector by 36 and provides sealing between the fiber tube 42 and the connector body 36.

FIG. 6 shows an example where the fiber tube 42 is coupled to the connector body 36 by retention teeth 100 (e.g., barbed teeth on a projection such as a nipple 101 unitarily formed with, overmolded into or otherwise connected to a rear end of the connector body 36). A heat shrink tube 102 (which may include internal adhesive) can assist in further securing and sealing the fiber tube 42 with respect to the rear end of the connector body 36.

FIGS. 7 and 8 show an example where a crimp band 104 (i.e., a crimp ring or crimp sleeve) is used to secure the fiber tube 42 to the rear end of the connector body 36. A main body of the connector body is overmolded over a crimp body 106 in the form of a barbed projection such as a nipple having a crush resistant construction (e.g., a metal construction). The fiber tube 42 is crimped between the crimp body 106 and the crimp band 104. A heat shrink sleeve can also be used to provide sealing.

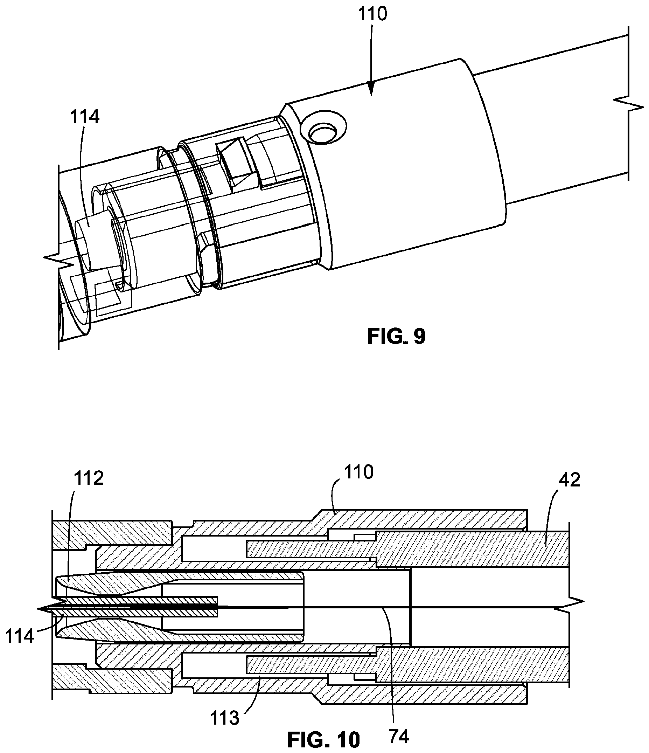

FIGS. 9 and 10 show an example in which an anchoring housing 110 is used to secure the fiber tube 42 to the rear end of the connector body 36. In one example, the housing can include internal teeth for gripping the fiber tube 42 and can be filled with adhesive (e.g., epoxy) to further secure the fiber tube 42 within the anchoring housing 110. In one example, the housing 110 include an annular teeth-containing receiver 113 into which an end of the fiber tube 42 is axially forced. In one example, the anchoring housing 110 can be secured to the rear end of the connector body 36 by a latched connection, an adhesive connection or other type of connection. In one example, a fiber transition housing 112 is bonded to an optical fiber 74 routed through the fiber tube 28 and the anchoring housing 110. The fiber transition housing 112 can be inserted forwardly through the anchoring housing 110 (e.g., through a structure that can flex radially outwardly to accommodate passage of the transition housing 112) and can be secured within the anchoring housing 110. The fiber transition housing 112 allows the fiber 74 to be upjacketed with a more robust material such as a buffer tube 114 (e.g., a 900-micron buffer tube). In one example, the fiber 74 is upjacketed from a coated fiber (e.g., a 200 micron or 250 micron coated fiber is upjacketed with a buffer tube such as a 900-micron buffer tube).

The housing assembly 34 can further include additional components such as an exterior flexible strain relief boot 56 that mounts over the rear end of the connector body 36 and extends over a portion of the length of the fiber tube 42. In certain examples, the strain relief boot 56 can have a plastic construction and can taper inwardly as the strain relief boot extends and a rearward direction. Additionally, the strain relief boot can be segmented to enhance flexibility.

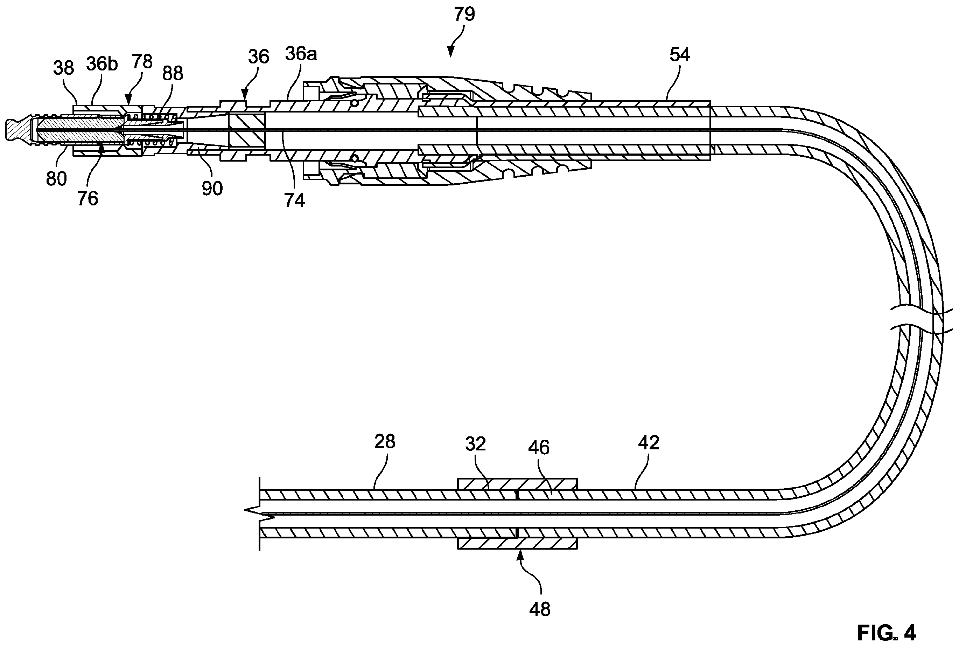

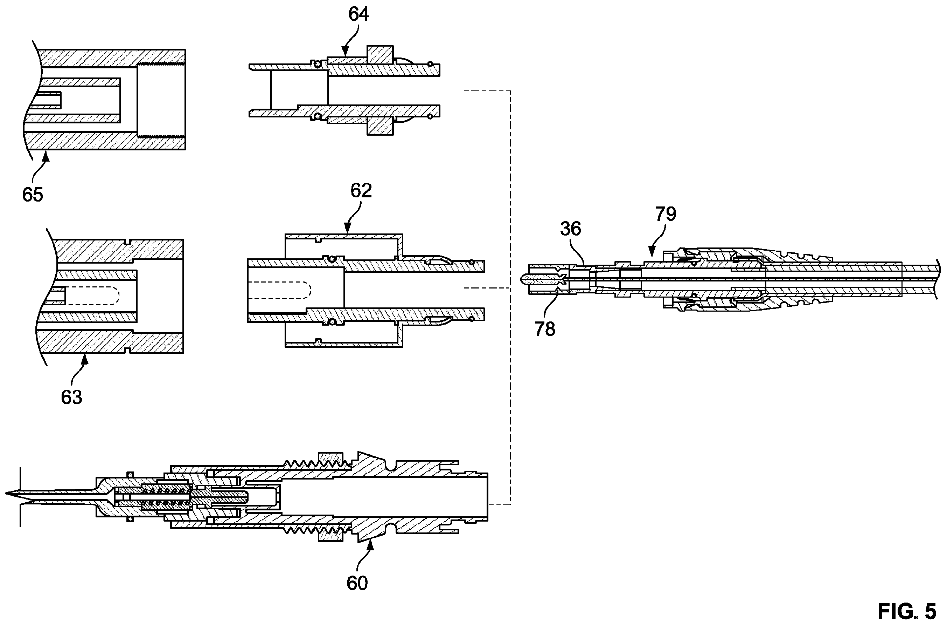

In certain examples, the housing assembly 34 can additionally include a fastener 58 for use in coupling the housing assembly 34 to a corresponding fiber optic adapter 60 (see Figure 5) once the housing assembly 34 has been integrated with a fiber ferrule assembly (e.g., ferrule assembly 78) to form a fiber optic connector 79 (see figure 4). The fastener 58 can also be used to secure one or more shroud assemblies 62, 64 over the exterior of the connector body 36. The shroud assemblies 62, 64 can be adapted to convert the connector body 36 to be compatible with different styles of fiber optic adapters 63, 65. In certain examples, the shroud assemblies 62, 64 can include structures for providing keying with respect to their corresponding fiber optic adapters 63, 65. Additionally, the shroud assemblies 62, 64 can include one or more seals and can further include fasteners such as threaded fasteners or bayonet style fasteners for securing the shroud assemblies 62, 64 to their corresponding fiber optic adapters 63, 65. Further details about the shroud assembles are disclosed in PCT International Publication Number WO 2021/041305.

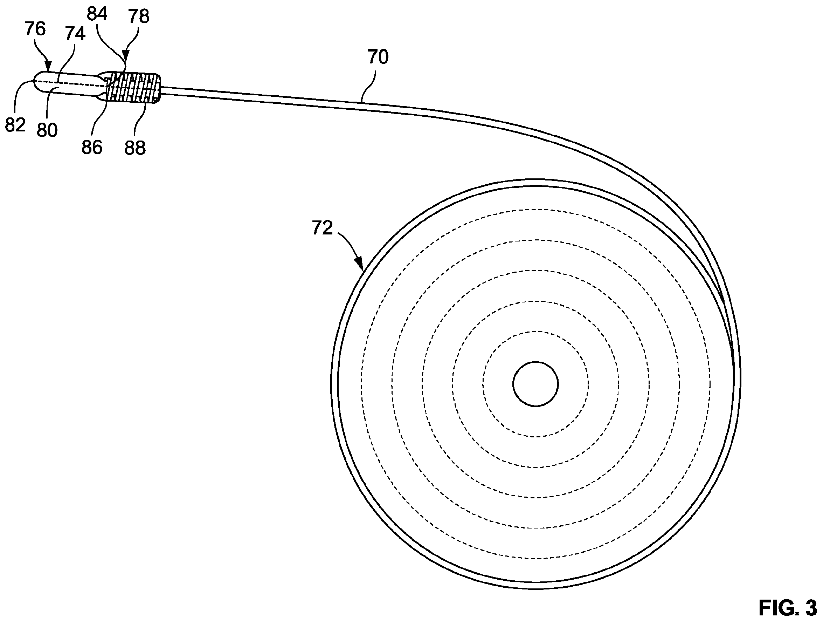

Figure 3 depicts another component that can be incorporated into a fiber deployment kit in accordance with the principles of the present disclosure. The component includes a fiber optic cable 70 coiled about a spool 72 or disposed within a container from which the fiber can be dispensed. The fiber optic cable 70 includes at least an optical fiber 74. In certain examples, the fiber optic cable 70 can include structure for protecting and/or reinforcing the optical fiber 74. For example, a buffer layer can be provided on or around the optical fiber 74. In certain examples a jacket can be provided about the optical fiber 74. In still other examples tensile reinforcing elements such as aramid yarn can be provided as part of the fiber optic cable 70.

The optical fiber 74 includes a ferrulized end 76 at which a ferrule assembly 78 is secured. In the field, the ferrulized end 76 is configured to be routed through the fiber tube 28 in a direction from the first end 30 to the second end 32. For example, the optical fiber 74 can be blown, pushed, or pulled through the fiber tube 28 with the ferrule assembly 78 leading the optical fiber 74. In certain examples, a protective housing or cap can be provided over the ferrule assembly 70 during deployment through the fiber tube 28. In certain examples, the spool 72 can rotate to allow the optical fiber 74 to be paid off from the spool 72 as the optical fiber is routed through the fiber tube 28. In other examples, the fiber can be coiled or otherwise packaged in a container from which the fiber can be dispensed with or without rotation of the container depending upon the way the fiber is packaged.

In one example, the ferrule assembly 78 can include a ferrule 80 in which the optical fiber 74 is mounted. The ferule 80 can include a front end 82 and a rear or base end 84. The optical fiber 74 can have a polished or otherwise processed end face located at the front end 82 of the ferrule 80. In certain examples, the optical fiber 74 is secured within a fiber passage of the ferrule 80 by adhesive such as epoxy. The ferrule assembly 78 can also include a ferrule hub 86 mounted to the rear end 84 of the ferrule 80. Additionally, the ferrule assembly 78 can include a spring 88 positioned behind the ferrule hub 86. In the depicted example, the ferrule is an SC ferrule, but other ferrules such as LC ferrules can also be used.

The ferrule assembly 78 is adapted to mounted within the housing assembly 34 after the ferrulized end 76 of the of the fiber optic cable 70 has been routed through the fiber tube 28 to the second location 24. To install the ferrule assembly 78 within the housing assembly 34, the ferrulized end 76 of the fiber optic cable 70, which includes the ferrule assembly 78, is inserted through the fiber tube 42 and the connector body 36 in a forward direction extending from the rear end 40 of the connector body 36 toward the front end of the connector body 36. The ferrule assembly 78 is mountable adjacent the front end 38 of the connector body 36 upon insertion of the ferrule assembly 78 forwardly through the fiber tube 42 and the connector body 36. In one example, the connector body 36 can include a rear portion 36a and a front portion 36b that can be connected and disconnected with respect to one another. In one example, the front portion and the rear portion 36a, 36b can be coupled together by a snap-fit connection. The front portion 36b can define a plug having a form factor suitable to interface with a corresponding fiber optic adapter. For example, the front portion 36b can be configured with a form factor corresponding to an SC connector compatible with an SC fiber optic adapter, or an LC connector compatible with an LC fiber optic adapter.

Referring to Figures 2 and 4, the housing assembly 34 further includes a rear spring stop 90 that mounts within the connector body 36 behind the front portion 36b of the connector body 36. In certain examples, the spring stop 90 can include a longitudinal slot defined therethrough for allowing the optical fiber 74 to be laterally inserted into an interior passage of the spring stop 90 once the ferrule assembly 78 has been routed to the front of the connector body 36. This allows the ferrule assembly 78 to be mounted within the connector body 36 at a location in front of the rear spring stop 90 such that the spring is captured between the rear spring stop 90 and the ferrule hub 86. In certain examples, when the ferrule assembly 78 is loaded into the interior of the connector body 36, the front portion 36b of the connector body 36 is removed from the rear portion 36a of the connector body 36 and the spring stop 90 is forwardly moved relative to the rear portion 36a of the connector body 36 to provide clearance for the ferrule assembly 78 to be moved outwardly from the rear portion 36a of the connector body 36 to provide better access for passing the optical fiber 74 laterally through the side slot of the spring stop 90 into the interior channel of the spring stop 90 to enable the ferrule assembly 78 to be mounted in front of the spring stop 90. Thereafter, the spring stop 90 can be moved rearwardly to a fixed position relative to the rear portion 36a of the connector body 36 and the front portion 36b of the connector by 36 can be secured to the rear portion 36a of the connector body such that the ferrule assembly 78 is captured within the interior of the connector body 36 between the front portion 36b of the connector body 36 and the spring stop 90. As so mounted, the spring 88 is captured between the spring stop 90 and the ferrule hub 86.

Figure 4 shows the ferrule assembly 78 and the optical fiber 74 mounted within the housing assembly 34 to form the assembled fiber optic connector 79. Additionally, as shown at Figure 4, the tube coupler 48 has been used to couple the rear end 46 of the fiber tube 42 to the second end 32 of the fiber tube 28. It will be appreciated that the fiber tube 42 can be factory installed on the connector body 36 and can initially have a length L at the time of initial shipment to the field location. However, the length L of the fiber tube 42 can be changed in the field by cutting off a rear end portion of the fiber tube 42. For example, by cutting, the length of the fiber tube 42 can be adjusted in the field to match a length of the optical fiber 74 that projects beyond the second end 32 of the fiber tube 28 upon deployment of the fiber optic cable 70 within the fiber tube 28. In one example, at the time of shipment, the fiber tube 42 can have a factory manufactured length that is at least .25 meters (m) long, or is at least .5 m long, or is at least .75 m long, or is at least 1 m long. In another example, the factory manufactured length of the fiber tube 42 prior to being cut can be in the range of .25 m to 3 m, or in the range of .25 m to 2 m, or in the range of .25 m to 1 m.

In certain examples, the fiber tube 34 is cut to a length that corresponds to a length the optical fiber 74 projects beyond the second end 32 of the fiber tube 42. In one example, the length is selected such that when the ferrule assembly 78 is installed in the connector body 36 and the tube 34 is coupled to the tube 42, a minimal amount of excess fiber (e.g., less than 10 percent or less than 5 percent or less than 3 percent) is provided between the ferrule and the second end 32 of the fiber tube 42. In certain examples, the optical fiber is anchored (e.g., axially fixed such as with epoxy) adjacent the second end 32 of the fiber tube 28. In certain examples, the fiber 74 is relatively stiff and does not readily buckle or bend within the connector or the tube 34.

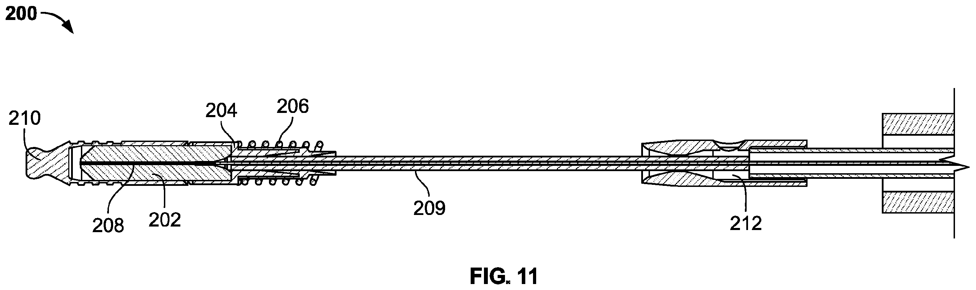

Figure 11 shows an example deployable assembly 200 (e.g., an assembly pushable, pullable or blowable through a conduit such as the conduit 28). The assembly includes a ferrule 202 (e.g., an SC ferrule), a ferrule hub 204, a spring 206 that mounts on the hub 204, an optical fiber 208 having an end portion supported in the ferrule 202, a transition housing 212 bonded to the fiber 208 and an upjacket layer 209 covering the fiber 208 from the transition housing 212 to a back end of the ferrule 202. A removeable dust cap 210 is mountable over the ferrule 202. In one example, the assembly 200 has a maximum cross-dimension less than or equal to 3.2 millimeters to assist in easily passing the assembly through a conduit having an inner diameter of about 4 millimeters. When assembled within a connector assembly, the transition housing 212 can be axially fixed (e.g., by a snap-fit connection, an adhesive connection or other type of connection) relative to a connector housing of the connector assembly. The ferrule dust cap 210 can be mounted directly over the ferrule 202 in frictional contact with the side of the ferrule 202.

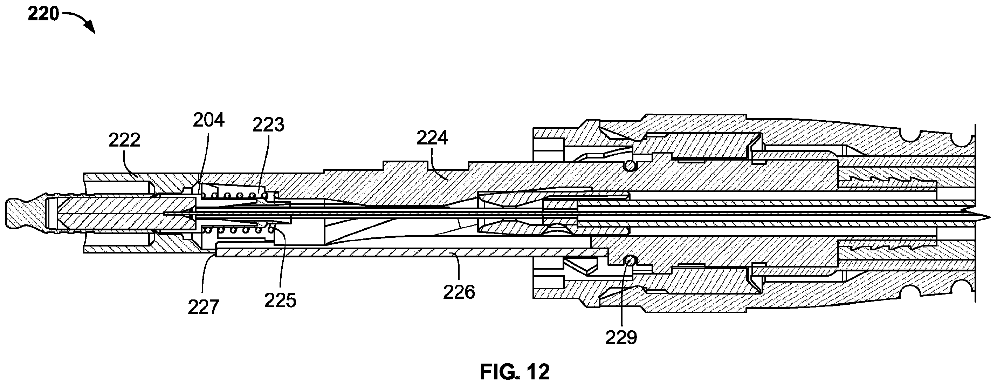

Figure 12 shows a connector assembly 220 mounted over the deployable assembly 200. The connector assembly 220 includes a front housing 222 (e.g., a front housing having an SC form factor), a core housing 224, a connector body cover 226, a core front dust cap 228 and the boot 56 with the coupler 58. In one example, the coupler 58 is adapted to engage the dust cap 228 to secure the dust cap over the front end of the front housing 22. The coupler 58 can also be used to secure a hardened converter housing assembly over the connector assembly, or to secure the connector assembly within a fiber optic adapter port. A seal such as an o-ring 229 mounts over the core housing 224 for sealing with the dust cap 228, an outer ruggedized converter shroud, or a mating fiber optic adapter. The seal 229 is positioned rearwardly with respect to the side opening 227 such that when the connector is mated with an adapter or dust cap the side opening 227 is inside a sealed region. The length of fiber tube 42 (e.g., a length of microtubing having an outer diameter of 7 millimeters and an inner diameter of 4 millimeters) is attached to a rear end of the core housing 224. The deployable assembly 200 is inserted through the core housing 224 and the ferrule assembly (e.g., the ferrule 202, hub 204 and spring 206) is loaded into a region such as a pocket 223 adjacent a front of the core housing 224. The front housing 222 is then positioned over the ferrule assembly and snapped onto the front end of the core housing 224. The connector body cover 226 is then snapped laterally onto the core housing 224 to retain the ferrule assembly in the front pocket 223 of the core housing 224. The spring 206 captured and compressed between a rear spring stop 225 at the pocket 223 of the core housing 224 and a shoulder of the ferrule hub 204. The front of the ferrule hub 204 can engage a shoulder within the front housing 222. The cover 226 is adapted to cover an elongate side opening 227 of the core housing 224 that extends rearwardly from the front end of the core housing 224. The side opening 227 of the core housing 224 allows the ferrule assembly to be routed outside an interior of the core housing 224 to allow the ferrule assembly to be routed around and forwardly past the spring stop 225 of the core housing 224. Alternatively, a rear spring stop could be provided as part of the connector body cover 226.

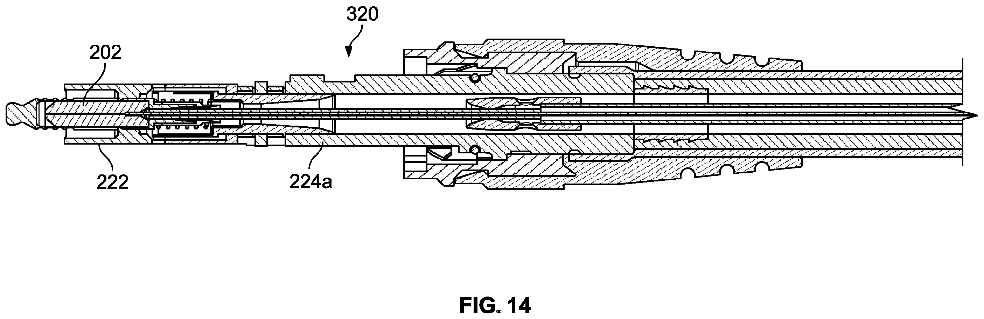

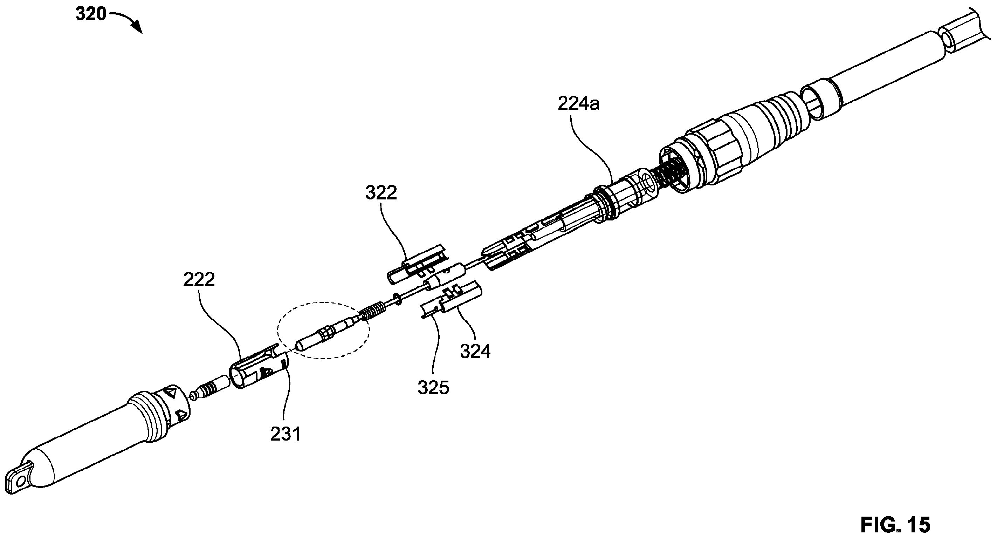

Figures 14 and 15 show an alternative connector assembly 320 adapted for use with the deployable assembly 200. For the connector assembly 320, a core housing 224a has an open sided front configuration adapted to connect with a two-piece rear spring stop assembly having first and second pieces 322, 324. The first and second pieces 322, 324 can be pre-assembled on the core housing 224a and can be slidable relative to the core housing 224 in opposite radial directions. When the deployable assembly is inserted forwardly through the core housing 224a, the ferrule assembly forces the first and second pieces 322, 324 radially apart to allow the ferrule assembly to pass through. Once the ferrule assembly has been passed through, the front housing 222 can be inserted over the ferrule assembly and snapped onto the front end of the spring stop assembly (e.g., tabs 325 on the rear spring stop assembly can fit within receptacles 231 defined by the front housing 222) thereby forcing the first and second pieces 322, 324 radially inwardly to a position in which the spring 206 is captured and compressed between the back end of the ferrule hub and stop features on the first and second pieces 322, 324.

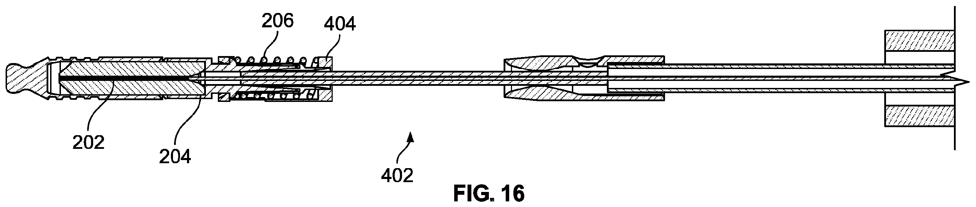

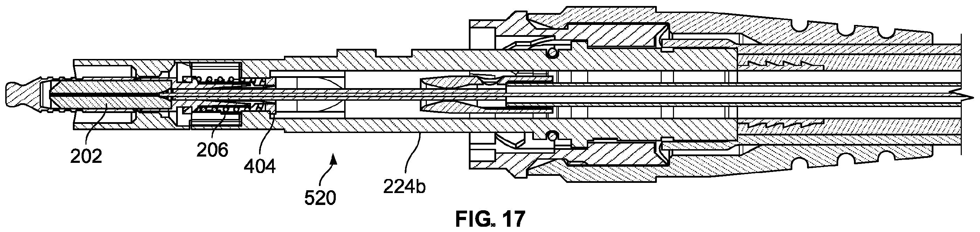

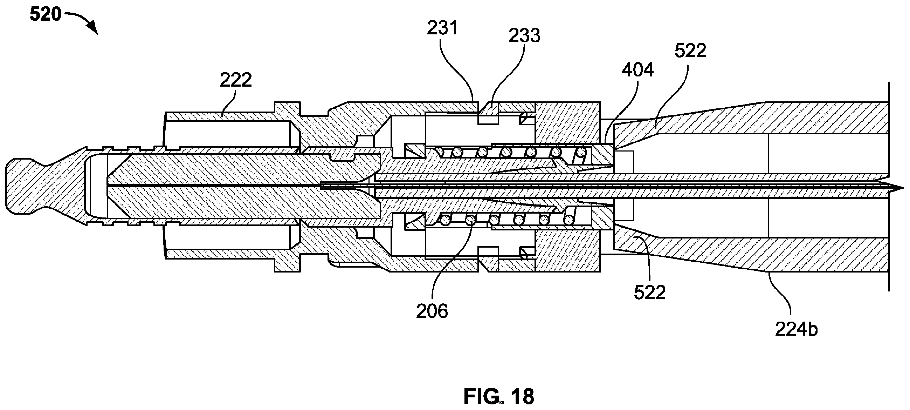

Figure 16 shows an alternative deployable assembly 402 having a spring stop 404 integrated with the ferrule hub 204 such that the spring 206 is captured between the rear side of the ferrule hub 204 and the spring stop 404. The spring stop 404 is deployable with the assembly 402 though a conduit such as the conduit 28. The spring stop 404 is axially moveable relative to the ferrule hub 204. Figures 17-19 show an alternative connector assembly 520 where a core housing 224b includes flexible stop latches 522 which flex apart when the ferrule assembly 402 is pushed through the core housing 224b. By latching (e.g., snapping) the front housing 222 on the front of the core housing 223 (e.g., via tabs 233 on the core housing 224b that snap within the receptacles 231 of the front housing 222), the spring stop 404 abuts against stops of the latches 522 causing the spring to be compressed as the inner shoulder of the front housing 222 engages against the front of the ferrule hub 204.

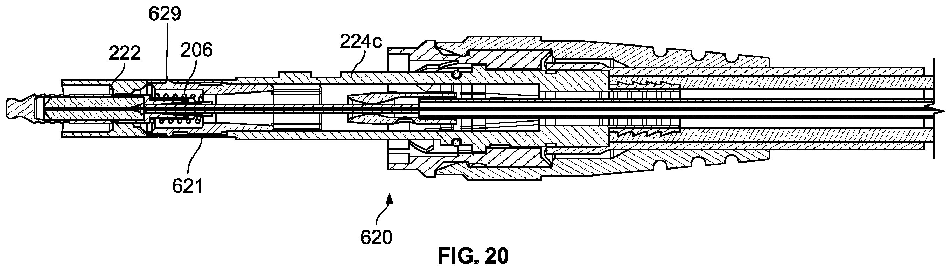

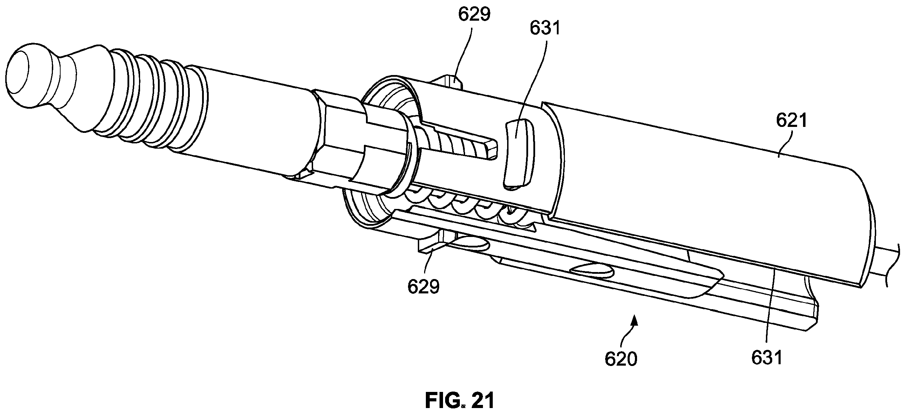

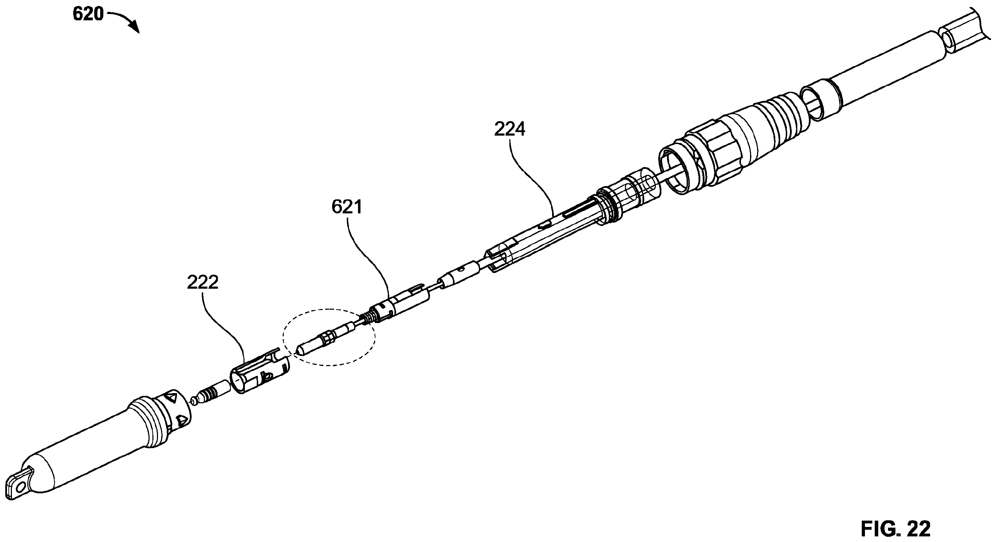

Figures 20-22 show an alternative connector assembly 620 adapted for use with the deployable assembly 200. For the connector assembly 620, a core housing 224c has a front end adapted to axially receive a longitudinally slotted spring stop housing 621 having slot 631 that extends through the length of the housing 621. Once the deployable assembly has inserted forwardly through the core housing 224c, the spring stop housing 621 can be inserted over the fiber at a location behind the spring 206 and loaded into the front end of the core housing 224c. The housing 621 latches and is axially fixed to the core housing 224c by tabs 629 that snap into receptacles 237 defined by the core housing 224c. Thereafter, the front housing 222 can be inserted over the ferrule assembly and snapped onto the front end of the spring stop assembly 621. The front housing 22 can be retained on the spring stop housing 621 by tabs 631 of the spring stop housing 621 that fit within the receptacles 231 of the front housing 222. Rearward movement of the front housing 222 relative to the spring stop housing 621 causes the spring 206 to be compressed between the back end of the ferrule hub and a stop feature of the spring stop housing 621.

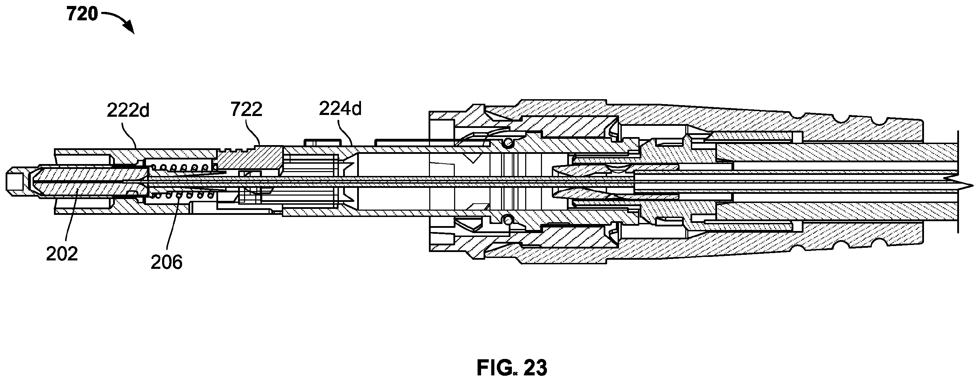

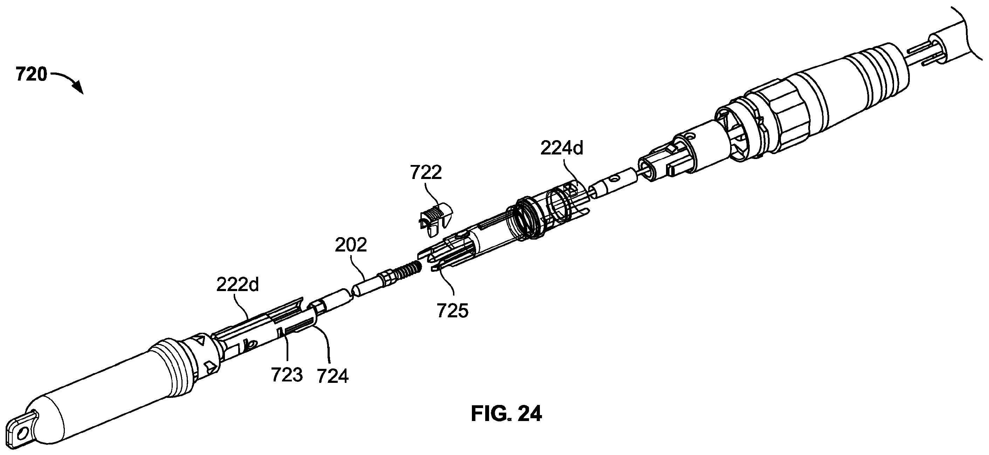

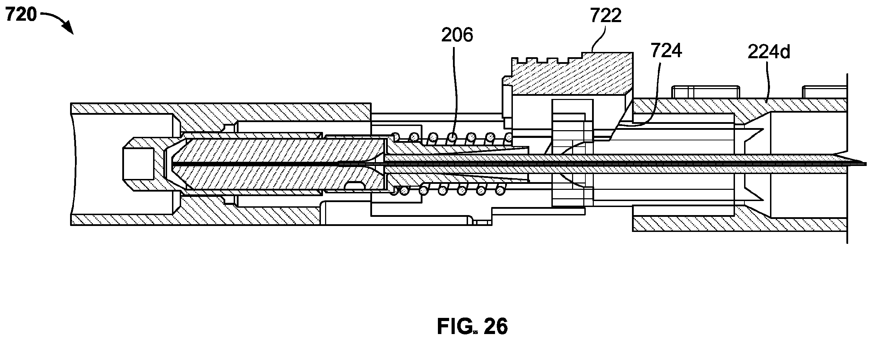

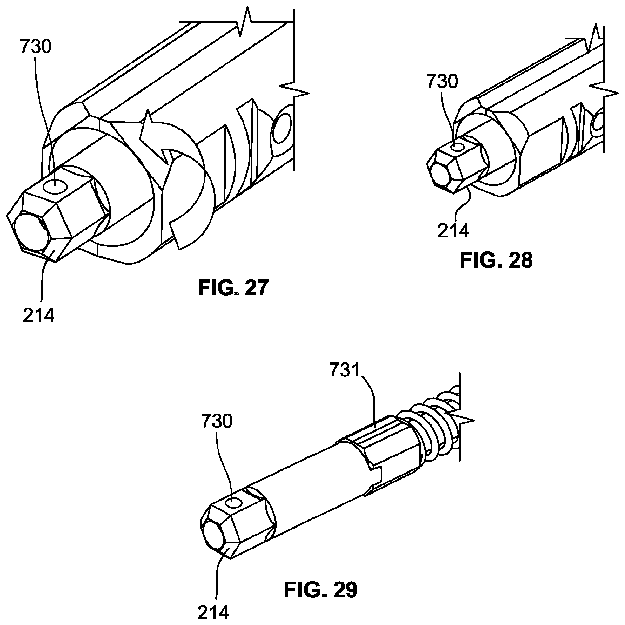

Figures 23 and 24 show an alternative connector assembly 720 adapted for use with the deployable assembly 200. For the connector assembly 720, a core housing 224d is pre-assembled with a spring stop member 722 and a front housing 222d. The front housing 222d is axially slidable relative to the core housing 224d and the spring stop member 722. The spring stop member 722 is laterally slidably relative to the front housing 222d and the core housing 224d. Initially, the front housing 222d may be retracted relative to the core housing 224d and the spring stop member 722 can be slid to an inward position relative to the core housing 224d. The front housing 222d can have a latching opening 723 and a slide slot 724. The core housing 224d can include a latching tab 725 that fits in the latching opening 723 to secure the front housing 222d in the retracted position relative to the core housing 224. The latching tab 725 can fit in the slide slot 724 to allow the front housing to be slid to an extended position relative to the core housing. A tool 727 integrated with the dust cap 228 can be used as a pry tool to facilitate moving the latching tab 725 from the latching opening 723 to the slide slot 724. With the latching tab in the slide slot 725, the deployable assembly can be inserted through the connector assembly. During insertion, contact between the ferrule assembly and a ramp 729 of the spring stop member 722 causes the spring stop member to move from the inner position laterally to the outer position (see Figure 26). With the spring stop member 722 in the outer position, the ferrule assembly and the ferrule spring can pass forwardly by the spring stop member 722. Continued forward movement of the ferrule assembly forces the front housing 222d to slide relative to the core housing 224d to the extended position (see Figure 26). In the extended position, sufficient axial length is provided for the rear end of the uncompressed ferrule spring to move past the spring stop member 722. The spring stop member 722 is then moved to the inner position (see Figure 23) to capture the spring axially between the spring stop member 722 and the back side of the ferrule hub. Similar to the other examples, the front side of the ferrule hub can engage a shoulder or other stop surface within the front housing 222d. The front housing 222d is then moved rearwardly from the extended position relative to the spring stop member 722 and the core housing 224 to compress the ferrule spring. The front housing 222d is moved rearwardly until it reaches the retracted position in which the latching tab 725 fits in the latching opening 723. In one example, the ferrule 202 can be rotated relative to the front housing 222d between different rotational positions to tune the connector. In one example, the ferrule dust cap 214 is keyed relative to the ferrule 202 and includes a tuning mark 730 indicative of a tuned position of the ferrule 202. Thus, to tune the connector (see Figures 27-29), a field installer can turn the dust capped ferrule until the mark aligns with a feature of the front housing 222d (e.g., until the mark aligns with the top side of the front housing 222d). The dust cap 214 can only be mounted in one rotational position relative to the ferrule and is not rotatable relative to the ferrule 202 when mounted. The mark 730 can align with a mark 731 on the ferrule hub and can be indicative of a fiber core offset location of the fiber 74 relative to the ferrule 202. In the field, the installer can push the ferrule into the connector against the bias of the spring by pushing on the dust cap to disengage the ferrule hub from a rotation stop at the interior of the front housing. Once the ferrule hub is disengaged, the installer can turn the ferrule to the tuned position by turning the ferrule via the dust cap. The dust cap can interlock with the ferrule hub by interlocking teeth or other structure that prevents rotation between the dust cap and the hub/ferrule. Once the ferrule is tuned, the installer can allow the spring to push the ferrule back outwardly from the front housing to re-engage the ferrule hub with the rotation stop at the interior of the housing thereby rotationally locking the ferrule in the tuned position.

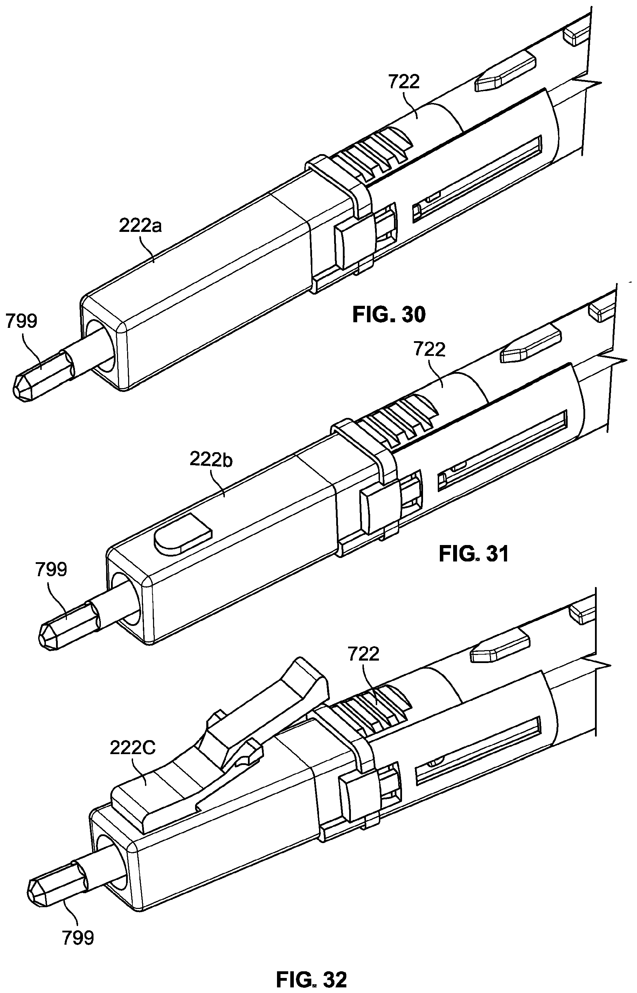

Figures 30-32 show the connector assembly 720 modified for use with a deployable assembly including an LC ferrule 802 (shown covered by an LC dust cap 799). The connector assembly has been modified to use front housings 222a-c having LC form factors. The front housings interface with the core housing 224d and the spring stop member 722 of the connector assembly 720 described above. In Figure 30, the front housing 222a has an LC formfactor with no latch and no key. In Figure 31 the front housing 222b has an LC form factor with a key but no latch. In Figure 31 the front housing 222c has an LC latch.

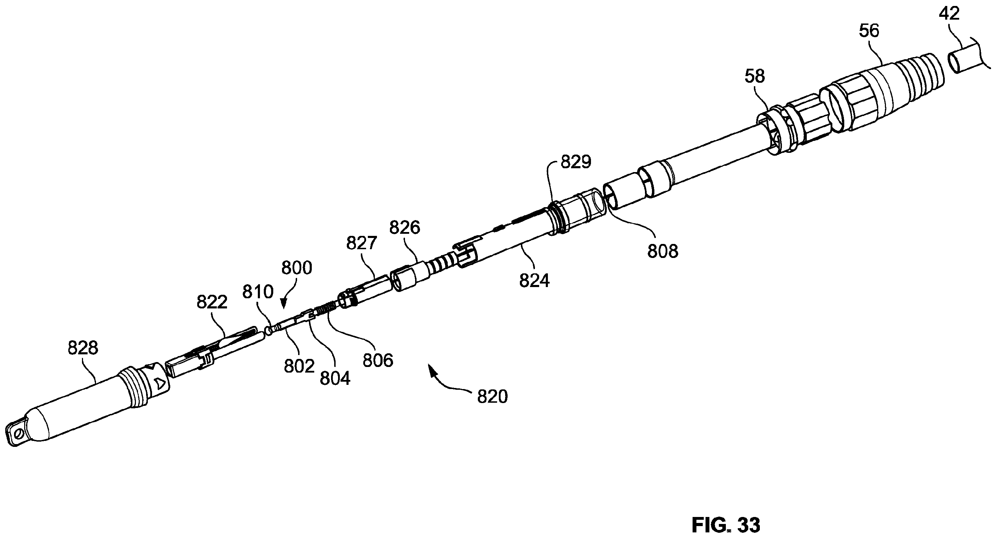

Figure 33 shows an example deployable assembly 800 (e.g., an assembly pushable, pullable or blowable through a conduit such as the conduit 28). The assembly includes a ferrule 802 (e.g., an LC ferrule), a ferrule hub 804, a spring 806 positioned behind the hub 804, and an optical fiber 808 having an end portion supported in the ferrule 802. The optical fiber 808 can be integrated as part of a mini cable having a jacket that surrounds the optical fiber and a strength layer (e.g., yarn such as aramid yarn) positioned inside the jacket adjacent the optical fiber 808. In one example, the cable can have an outer diameter less than or equal to 1.2 millimeters. A removeable dust cap 810 is mountable over the ferrule 802. In one example, the assembly 800 has a maximum cross-dimension less than or equal to 3.2 millimeters to assist in easily passing the assembly through a conduit having an inner diameter of about 4 millimeters. The ferrule dust cap 810 can be mounted directly over the ferrule 802 in frictional contact with the side of the ferrule 802.

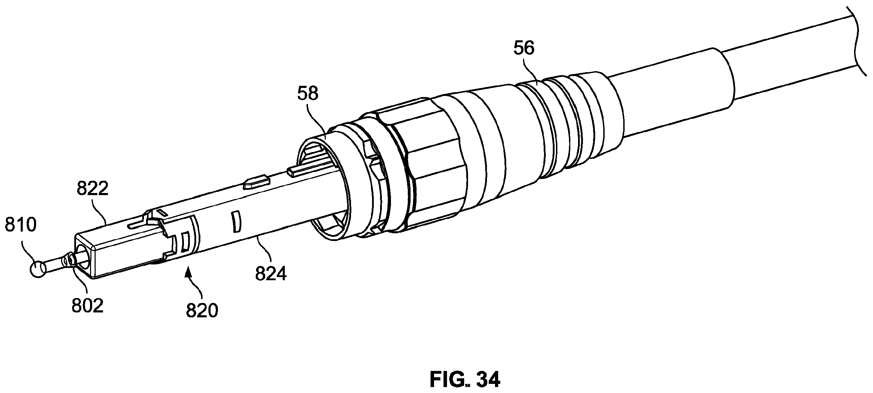

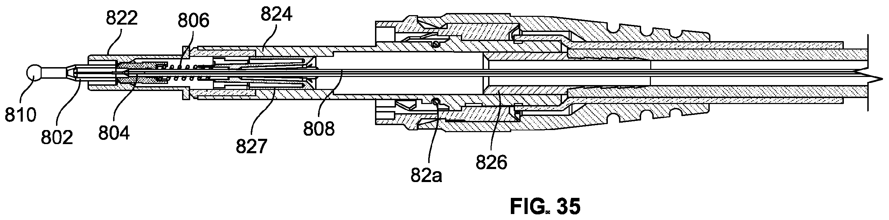

Figure 33 also shows a connector assembly 820 mountable over the deployable assembly 800. The connector assembly 820 includes a front housing 822 (e.g., a front housing having an LC form factor), a core housing 824, a rear tube mounting body 826, a rear spring stop 827, a core front dust cap 828 and the boot 56 with the coupler 58. In one example, the coupler 58 is adapted to engage the dust cap 828 to secure the dust cap over the front end of the front housing 822. The coupler 58 can also be used to secure a hardened converter housing assembly over the connector assembly, or to secure the connector assembly within a fiber optic adapter port. A seal such as an O-ring 829 mounts over the core housing 824 for sealing with the dust cap 828, an outer ruggedized converter shroud, or a mating fiber optic adapter. The length of fiber tube 42 (e.g., a length of microtubing having an outer diameter of 7 millimeters and an inner diameter of 4 millimeters, but other sizes can be used as well) is adapted to be attached to a rear end of the core housing 824 via the rear tube mounting body 826. FIGS. 34 and 35 show the connector assembly 820 in an assembled state with the deployable assembly 800 installed therein.

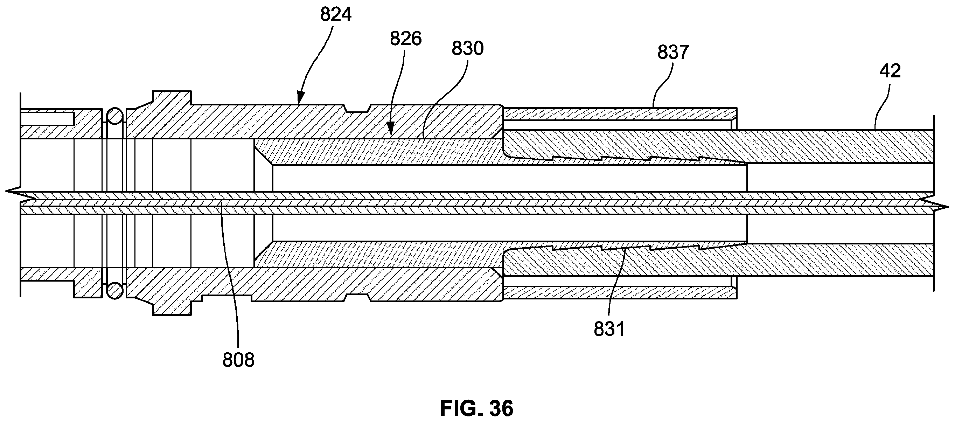

Referring to FIGS. 36-40, the rear tube mounting body 826 mounts at the rear end of the core housing 824. To mount the rear tube mounting body 826 to the core housing 824, the rear tube mounting body 826 is loaded into the core housing 824 through the front end of the core housing 824 and slid rearwardly through the interior passage of the core housing 824 until an axial stop (e.g., shoulders 835) on the exterior of the rear tube mounting body 826 engages an axial stop within the interior of the core housing 824 to stop rearward movement of the rear tube mounting body 826 relative to the core housing 824. In one example, the rear tube mounting body 826 includes a main body 830 and a barbed fitting 831 that projects rearwardly from the main body 830 beyond the rear end of the core housing 824. The rear tube mounting body 826 includes lateral projections 832 that project laterally from the main body 830. The lateral projections 832 fit within receivers 833 defined within the passage of the core housing 824 to guide insertion of the rear tube mounting body 826 axially through the core housing 824 and to limit rotation of the rear tube mounting body 826 relative to the core housing 824 about a central axis of the core housing 824. The lateral projections 832 also defines shoulders 835 that face rearwardly and function as axial stops adapted to oppose forwardly facing shoulders 836 defined within the core housing 824 to stop rearward movement of the rear tube mounting body 826 relative to the core housing 824. The fiber tube 42 can be secured to the core housing 824 by inserting the fiber tube 42 over the fitting 831 such that the barbs of the fitting embed within the interior of the fiber tube 42. In one example, a crimp ring 837 can be used to crimp the end of the fiber tube 42 onto the fitting 831. Once the crimp ring 837 is secured over the fiber tube 42, interference between the crimp ring 837 and the rear end of the core housing 824 resists for movement of the rear tube mounting body 826 relative to the core housing 824.

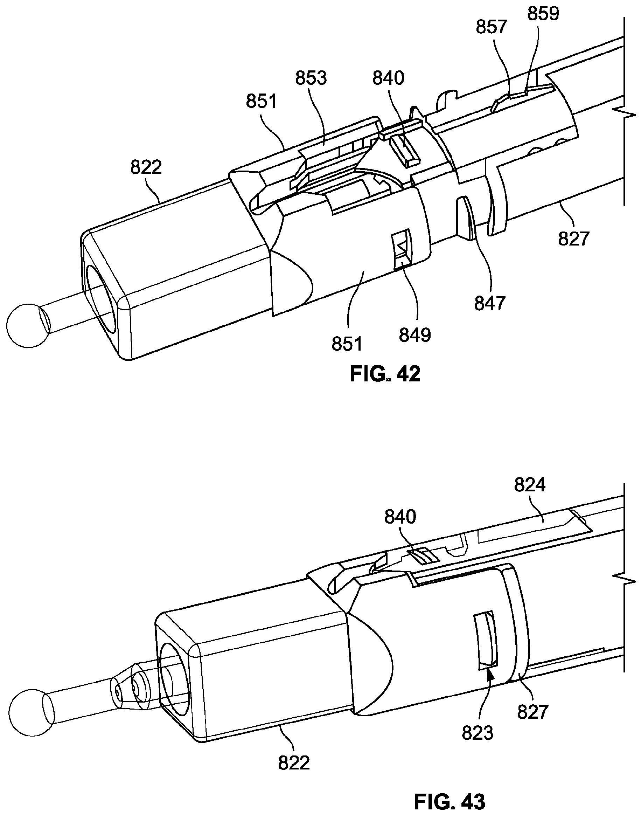

In certain examples, the front housing 822, the core housing 824, the rear spring stop 827, the rear tube mounting body 826 and the fiber tube 42 can be preassembled prior to receiving the deployable assembly 800. In one example, the front housing 822, the core housing 824, the rear spring stop 827, the rear tube mounting body 826 and the fiber tube 42 can be preassembled in the factory and delivered assembled for deployment in the field. The rear spring stop 827 can be secured within the core housing 824 by latches 840 or other type of snap-fit connection. The rear spring stop 827 includes arms 842 that cooperate to define a stop feature 853 for opposing a rear end 855 of the spring 806 when the deployable assembly 800 is installed within the connector assembly 820. The arms 842 are movable between a spring retaining position and a ferrule assembly pass-through position. The arms 842 can have a cantilever configuration and can be biased toward the spring retaining position such that the spring retaining position is a neutral state of the arms 842. The arms 842 move radially outwardly from the spring retaining position to the ferrule assembly pass-through position. The front housing 822 is movable between a first axial position and a second axial position relative to the rear spring stop 827. **In** one example, the first axial position is a forward position (see FIG. 42 where the front housing is moved at least partially toward the forward position) and the second axial position is a rearward position (see FIG. 43). In one example, a detent 857 can retain the front housing 822 temporarily in the forward position. In one example, the second, rearward position is a final assembled position of the front housing 822 and a latch arrangement 823 defined between the front housing and the rear spring stop 827 retains the front housing 822 in the rearward position. In alternative examples, the latch arrangement can be defined between the front housing 822 and the core housing 824.

In one example, a cam arrangement can be defined between the front housing 822 and the retaining arms 842 of the rear spring stop 827 for moving the retaining arms 842 between the spring retaining position and a ferrule assembly pass-through position. In one example, the cam arrangement can include ramp surfaces 843 defined on rearward extensions 845 of the front housing 822 adapted to engage corresponding surfaces outward lateral projections 833 (see FIG. 48) on the retaining arms 842 causing movement of the retaining arms 842 radially as the front housing 822 is moved axially in a forward direction relative to the rear spring stop 827. During deployment operations, the front housing 822 is initially positioned in the front, first axial position. With the front housing 822 in the front, first axial position, the retaining arms 842 are forced by the ramp surfaces 843 to the outward ferrule assembly pass-through position. The lateral projections 833 can seat within notches defined between the detents 857 and stops 859 of the rear extensions 845 to temporarily retain the front housing 822 in the front, first axial position relative to the rear spring stop 827 and the core housing 824. The stops 859 limit the amount the front housing 822 can be forwardly moved relative the rear spring stop 827 and the core housing 824. With the retaining arms 842 in the ferrule assembly pass-through position, the ferrule 802, the ferrule hub 804 and the ferrule spring 806 can be passed from the core housing 824 forwardly through the rear spring stop 827. Once the rear end of the ferrule spring 806 passes the retaining surfaces of the retaining arms 842, the front housing 822 is moved from the forward axial position to the rearward axial position such that the ramp surfaces 843 allow the retaining arms 842 to return to the spring retaining position (e.g., via the inherent elasticity of the retaining arms). With the retaining arms 842 in the spring retaining position, the stop feature 853 of the retaining arms 842 oppose the rear end 857 of the ferrule spring 806 such that the ferrule 802, the hub 804 and the spring 806 are captured between the stop feature 853 of the retaining arms 842 and the front end of the front housing 822. The front housing 822 preferably automatically latches relative to the core housing 824 or the rear spring stop 827 when the front housing reaches the rear position to prevent the front housing 822 from being displaced forwardly from the rear position (e.g., see latch arrangement 823). As depicted by FIGS. 42 and 43, the latch arrangement 823 includes latch tabs 847 that snap within openings 849 at sides of the front housing 822. The openings 849 are defined by opposite rear side wall extensions 851 of the front housing 822 that are outwardly offset and parallel to the rear extension 845. The cam arrangement is integrated at inner sides of the rear extensions 845. The rear side wall extensions 851 are separated from each other by a gap 873. The front housing 822 defines a tapered receiver 875 at the front end of the gap 873 for receiving a tapered projection 877 (e.g., a triangular projection) located at the front of the rear spring stop 827 when the front housing 822 is latched in the rear position relative to the rear spring stop 827 (see FIG. 48).

The core housing 824 incudes opposite top and bottom front extensions 879 separated by front side openings 881. The rear side wall extensions 851 are adapted to fit within the front side openings 881 and the front extensions 879 are adapted to fit within the gaps 873 when the connector assembly 820 is assembled. The front extensions 879 define latch openings for receiving the latches 840 of the rear spring stop 827.

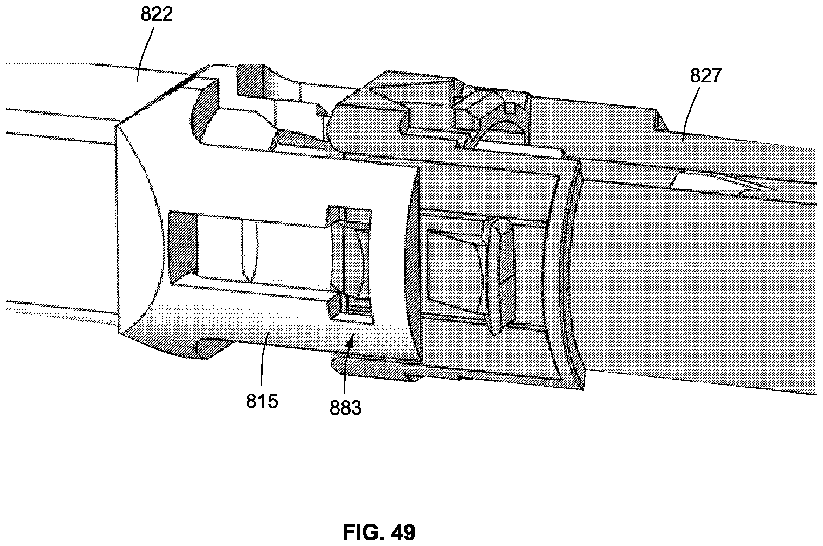

FIG. 49 depicts an alternative detent arrangement 883 for retaining the front housing 822 in the forward position relative to the rear spring stop 827. The detent arrangement is defined between the rear side wall extensions 815 and the sides of the rear spring stop 827.

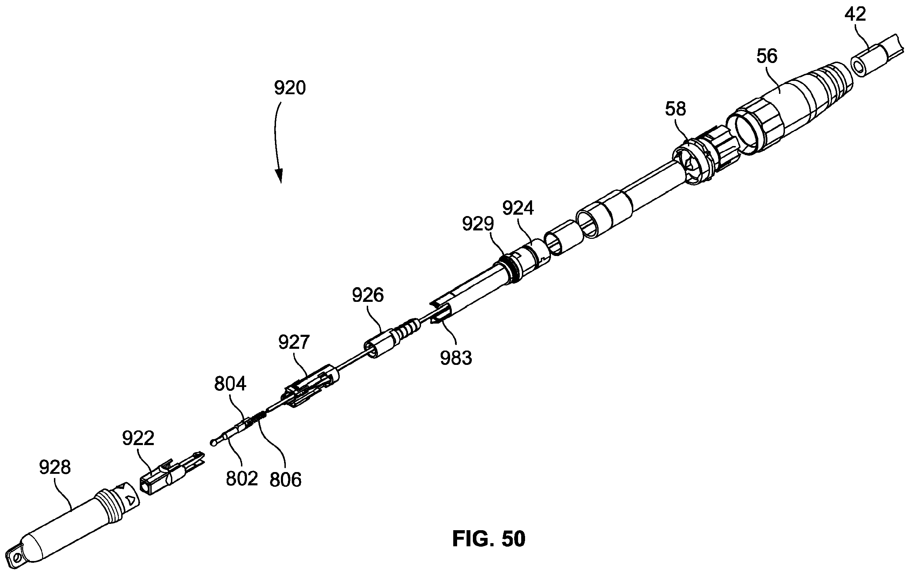

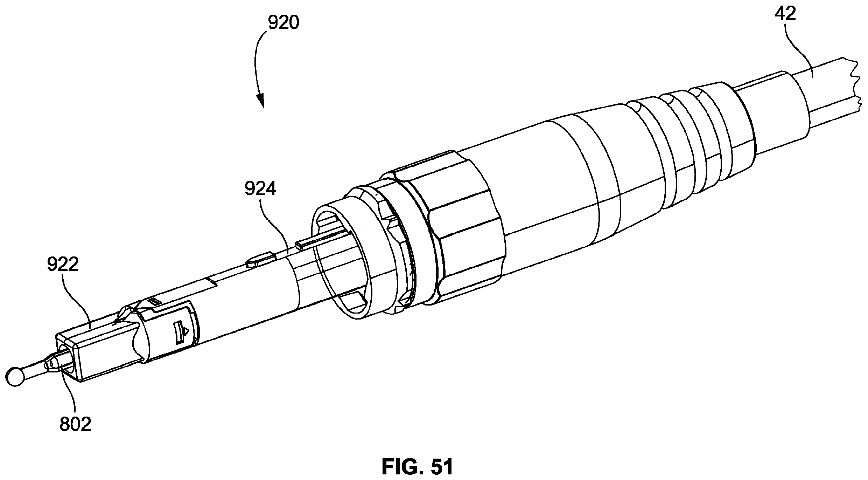

Figures 50 and 51 show another connector assembly 920 mountable over the deployable assembly 800. The connector assembly 920 includes a front housing 922 (e.g., a front housing having an LC form factor), a core housing 924, a rear tube mounting body 926, a rear spring stop 927, a core front dust cap 928 and the boot 56 with the coupler 58. In one example, the coupler 58 is adapted to engage the dust cap 928 to secure the dust cap over the front end of the front housing 922. The coupler 58 can also be used to secure a hardened converter housing assembly over the connector assembly, or to secure the connector assembly within a fiber optic adapter port. A seal such as an O-ring 929 mounts over the core housing 924 for sealing with the dust cap 828, an outer ruggedized converter shroud, or a mating fiber optic adapter. The length of fiber tube 42 (e.g., a length of microtubing having an outer diameter of 7 millimeters and an inner diameter of 4 millimeters, but other sizes may be used as well) is adapted to be attached to a rear end of the core housing 824 via the rear tube mounting body 826. FIG. 51 shows the connector assembly 920 in an assembled state with the deployable assembly 800 installed therein.

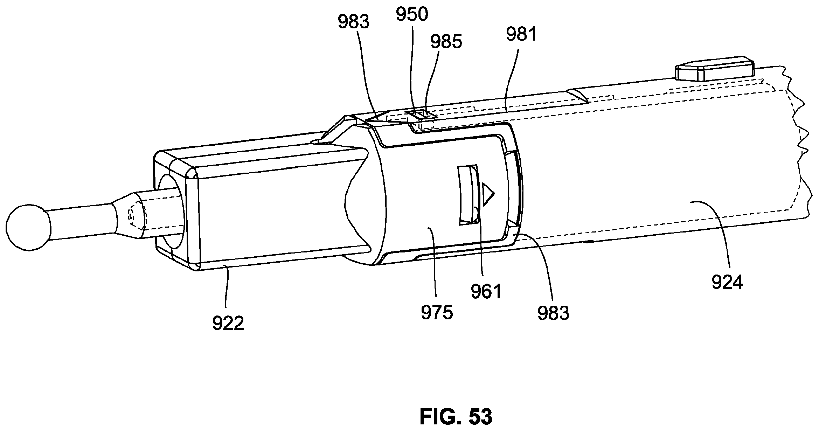

The core housing 924 can include a front end having front extensions 981 separated by side openings 983 (see FIGS. 50 and 53). At least one of the extensions 981 can include a tapered front projection 983 (see FIG. 53) that in one example can be triangular. The extensions 981 define openings 985 that form latch catches for use in latching the rear spring stop 927 to the core housing 924.

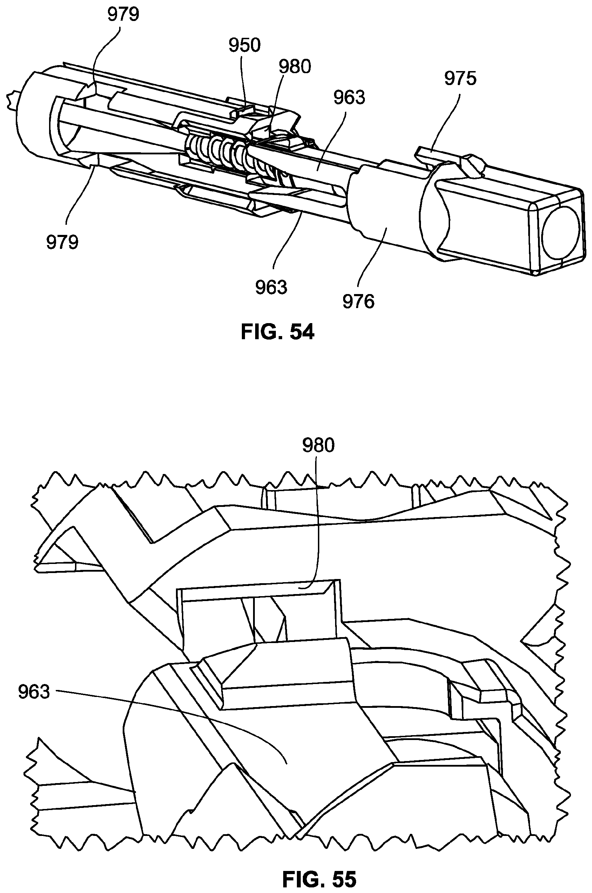

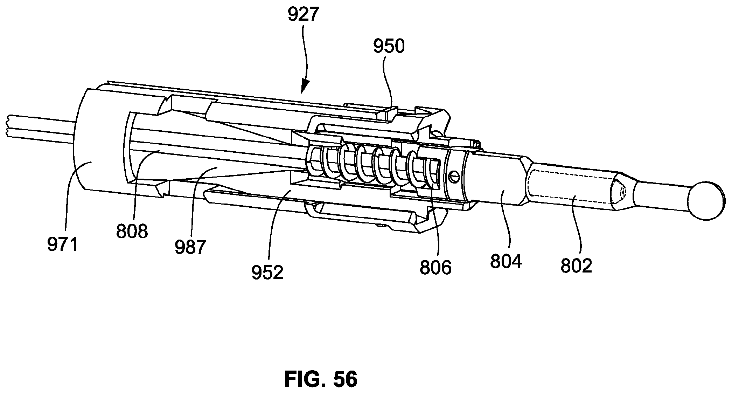

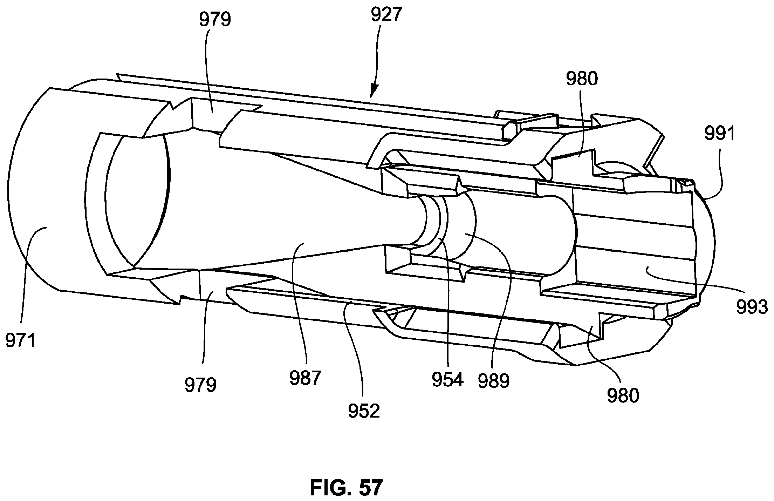

The rear spring stop 927 mounts in the core housing 924 and can be secured therein by a snap-fit connection such as latches 950 which snap within the openings 985 defined through the front extensions 981. In one example, the rear spring stop 927 is secured in the core housing 924 before routing the ferrule assembly therethrough (e.g., in the factory to minimize loose parts in the field). The rear spring stop 927 includes an open side 952 (see FIGS. 56 and 57) extending through a majority of a length of the rear spring stop 927 for allowing the ferrule 802, the ferrule hub 804, the ferrule spring 806 and the optical fiber 808 to be routed around a stop surface 954 (e.g., a spring stop surface, see FIG. 54) of the rear spring stop 927 and then moved laterally in front of the stop surface 954 of the rear spring stop 927 after the ferrule 802, ferrule hub 804 and the ferrule spring 806 have been moved forwardly past the stop surface 954 such that the stop surface 954 opposes a rear end of the ferrule spring 806. Once the ferrule assemble is located in front of the stop surface 954, the front housing 922 can be secured in front of the spring stop 927 (e.g., by latching via rear latches 960 and latch 961) to capture the ferrule assembly axially between the front housing 922 and the spring stop 927. The spring stop 927 can have a contoured passage 987 at the open side 952 for guiding the ferrule assembly around the stop surface 954 as the ferrule assembly is inserted forwardly through the core housing 924 while the spring stop 927 is secured within the core housing 924. Once the rear end of the spring 806 moves forwardly past the stop surface 954, the ferrule assembly can be manually moved laterally to a position directly in front of the stop surface 954. The spring can then be moved rearwardly into the spring retention pocket 989. The front end of the spring stop 927 includes a front extension 991 defining a pocket 992 aligned with the spring retention pocket 989 for receiving the ferrule hub 804. The side opening 983 at the front of the core housing 924 provide space for facilitating routing the ferrule assembly through the core housing 924 and around the stop surface 954 while the rear spring stop 927 is mounted in the core housing 924.

In alternative examples, the spring can be laterally inserted between flexible arms for receiving the spring when the spring is moved laterally in front of the stop surface such that the spring is retained in position in front of the stop surface 954. In alternative examples, the open side 952 can extend through the entire length of the rear spring stop 927. In the depicted example, the open side 952 is closed adjacent a rear end of the rear spring stop 927 by a strut 971 (see FIGS. 56 and 57) that enhances the circumferential strength of the rear spring stop 927. The passage 987 can be enlarged adjacent the closed end of the open side 952 to provide clearance space for passing the ferrule assembly through the open side and can constrict (e.g., funnel down) as the passage extends toward the stop surface 954.

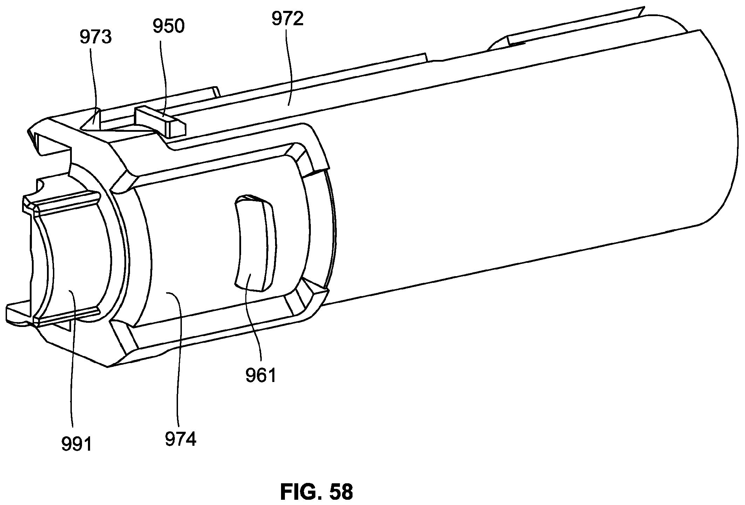

The exterior of the rear spring stop 927 can include recessed regions 972 (see FIG. 58) for receiving the front extensions 981 of the core housing 924. The latches 950 can be located in the recessed regions 972 and at least one of the recessed regions 972 can include a tapered front portion 973 configured for receiving the tapered front projection 983 of the core housing 924. The exterior of the rear spring stop 927 also defines a recessed region 974 (see FIG. 58) opposite the open side 954 and adjacent the front of the rear spring stop 927. The latch 961 is provided in the recessed region 974.

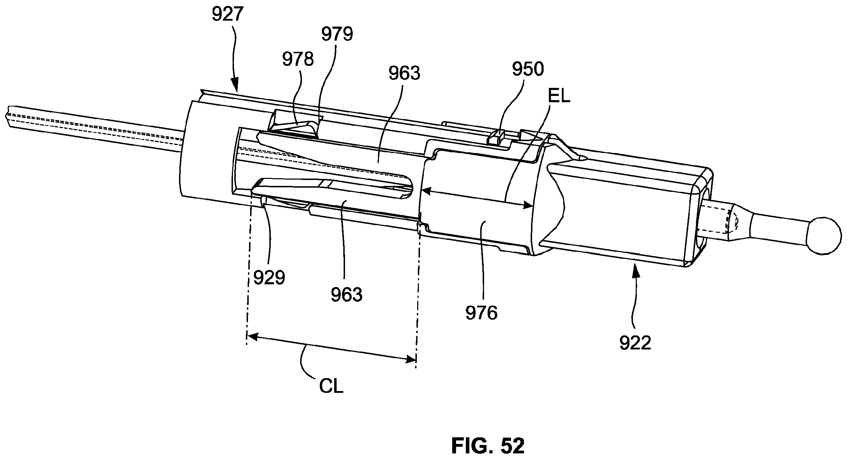

The front housing 922 includes rear side wall extensions 975, 976. Side wall extension 975 is adapter to fit within the recessed region 974 and includes a latch opening 977 for receiving the latch 961 for securing the front housing 922 to the rear spring stop 927. The rear latches 960 are defined by cantilevers 963 (e.g., a pair of cantilevers arranged in retention fork configuration) that project rearwardly from the rear side wall extension 976. The cantilevers 963 include retention tabs 978 adjacent their rear ends. The rear spring stop 927 includes latch openings 979 for receiving the retention tabs 978 to secure the front housing 922 to the rear spring stop 927. The rear spring stop 927 includes guide channels 980 for guiding the cantilevers 963 to the latch openings 979 when the rear spring stop 927 and the front housing 922 are inserted together. When the rear spring stop 927 and the front housing 922 are latched together, the rear side wall extension 976 and the cantilevers 963 at least partially cover the open side 952 to assist in maintaining the ferrule assembly and spring in their corresponding pockets. The rear side wall extensions 975, 976 fit within the side openings 983 of the core housing 924 (see FIG. 53) when the connector assembly is fully assembled. The cantilevers 963 provide the front housing 922 and the rear spring stop 927 with an asymmetric latching configuration in which latching locations on opposite sides of the housings 922, 927 are offset from one another in a front-to rear orientation. In one example, the rear latches 960 provide latching engagement closer to the rear of the rear spring stop 927 and the latch 961 provides latching engagement closer to the front to the rear spring stop 927. In one example, the cantilevers 963 extend rearwardly from the rear side wall extension 976 along a cantilever length CL that is longer than corresponding extension lengths EL of the rear sided wall extensions 975, 976 measured in the same orientation (i.e., a front-to-rear orientation, see FIG. 52).

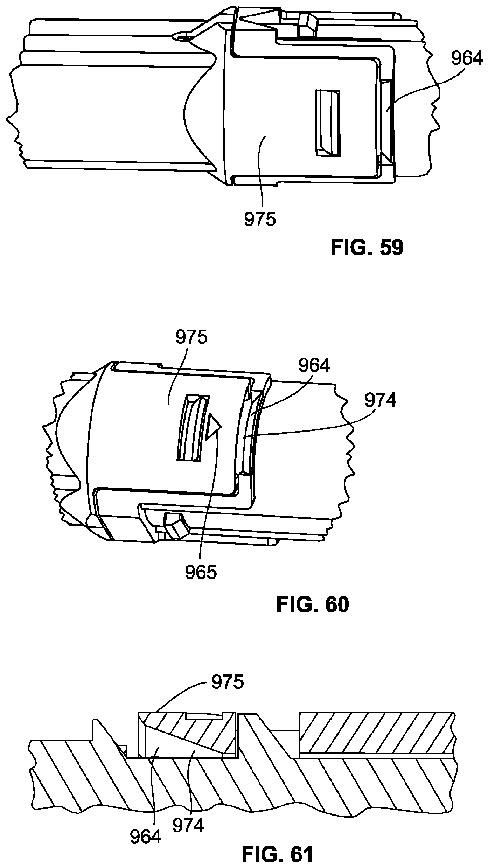

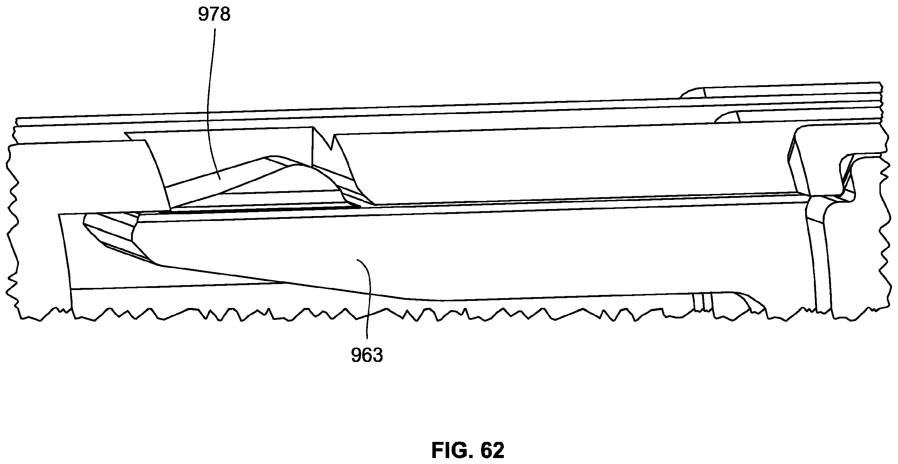

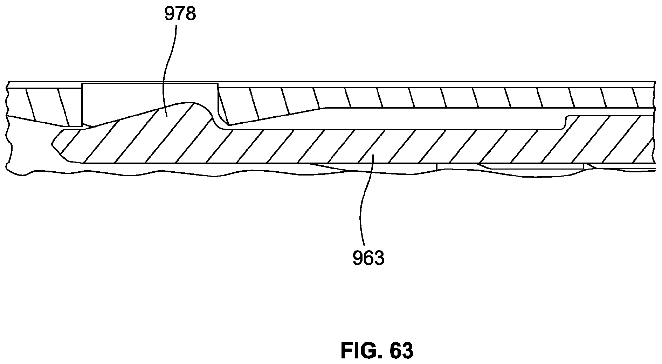

Referring to FIGS. 59-61, in other examples, the rear side wall extension 975 and the recessed region 974 can include a cutout 964 configured for receiving a pry tool such as a flathead screwdriver to assist in unlatching the front housing 922 from the rear spring stop 917. An indicator 965 can be provided to mark the location of the cutout 964. Also, as shown at FIGS. 62 and 63, the retention tabs 978 on the cantilevers 963 can be more rounded to facilitate unlatching the front housing 922 from the rear spring stop 927.

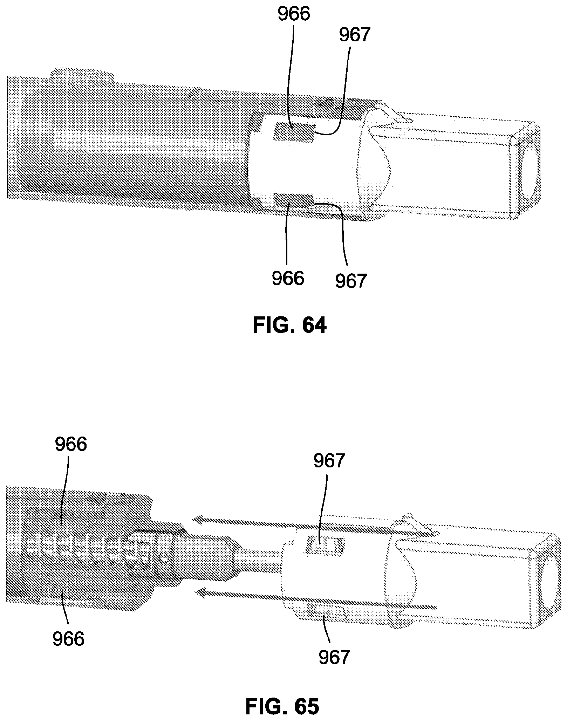

FIGS. 64 and 65 depict an alternative latching configuration at the rear side wall extension 975 having two circumferentially spaced apart latches 966 on the rear spring stop that engage circumferentially spaced apart openings 967 defined by the rear side wall extension 975 of the front housing piece.

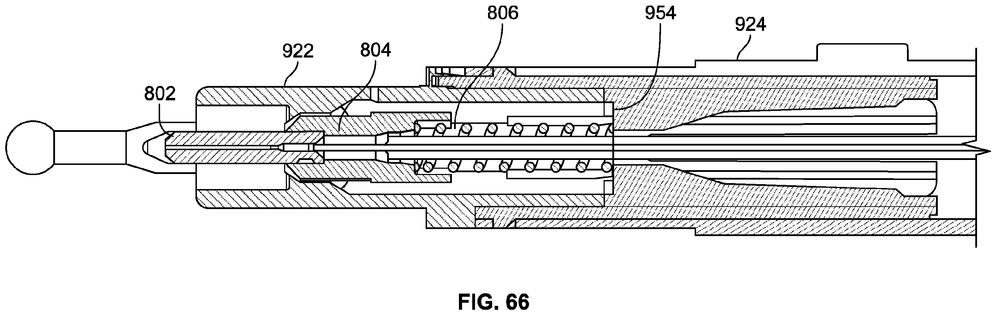

FIG. 66 shows an alternative example where the spring stop 927 has been lengthened to bring the stop surface 954 closer to the front end of the core housing 924 such that easier access to the ferrule assembly is provided for allowing the ferrule assembly to be manually moved laterally in front of the stop surface 954.

While the various depicted examples have shown single fiber ferrule systems, aspects of the present disclosure are also applicable to ferrule systems that are deployable through ducts and that include multi-fiber ferrules (i.e., ferrules that each support more than one optical fiber).

In certain examples, external sealing of connector arrangements in accordance with the principles of the present disclosure (e.g., sealing that occurs between the connector assembly and a mating fiber optic adapter, dust cap or other connector) can be provided about an exterior of the core housing (e.g., by a seal such as an o-ring; the seal can be an axial seal or a radial seal) at a location rearward of any side access structures (e.g., openings, notches, slots, covers, etc.) for use in assisting routing ferrule assemblies in a rearward to forward direction through the connector assemblies during installation.

As disclosed herein a dimension is "about" a specified dimension if the dimension equals the specified dimension or is within normal manufacturing tolerances of the specified dimension.

From the forgoing detailed description, it will be evident that modifications and variations can be made in the devices of the disclosure without departing from the scope of the invention as defined by the appended claims.

## Claims

1. A system for deploying optical fiber (74) through a first fiber tube (28) having a first end (30) and an opposite second end (32), the system comprising:
an optical fiber (74) having a ferrulized end (76) at which a ferrule assembly (78) is secured, the ferrulized end being configured to be routed through the first fiber tube in a direction from the first end to the second end of the first fiber tube;
a fiber optic connector (79) including a connector body (36) having a front end (38) and a rear end (40), the ferrule assembly being adapted to be incorporated as part of the fiber optic connector after having been routed through the first fiber tube, **characterised by**
the fiber optic connector including a second fiber tube (42) that projects rearwardly from the rear end of the connector body, the second fiber tube including a front end (44) anchored and sealed with respect to the connector body and a rear end (46) positioned rearward of the rear end of the connector body, the ferrulized end of the optical fiber being insertable through the second fiber tube and the connector body in a forward direction extending from the rear end of the connector body toward the front end of the connector body, the ferrule assembly being mountable adjacent the front end of the connector body upon insertion of the ferrule assembly forwardly through the second fiber tube and the connector body; and
a tube coupler (48) for coupling the second end of the first fiber tube to the rear end of the second fiber tube after the ferrulized end of the optical fiber has been inserted through the second fiber tube.

2. The system of claim 1, wherein the second fiber tube is secured to the connector body by adhesive; or
the second fiber tube is secured to the connector body by a heat shrink tube.

3. The system of claim 1, wherein the second fiber tube is factory pre-installed to the connector body prior to the fiber optic connector being used in the field,
wherein the second fiber tube initially includes a first length and is configured to be cut to a shorter second length in the field prior to coupling the first and second fiber tubes together with the tube coupler,
wherein the second length is selected to correspond to a distance the ferrulized end of the optical fiber projects beyond the second end of the first fiber tube, wherein the first length is at least .25 meters long, or is at least .5 meters long, or is at least .75 meters long, or is at least 1 meter long or is in the range of .25 meters to 3 meters, or in the range of .25 meters to 2 meters, or in the range of .25 meters to 1 meter.

4. The system of claim 1, wherein the first and second fiber tubes are blown fiber tubes,
wherein the first and second tubes each have an outer diameter of about 7 millimeters and an inner diameter of about 4 millimeters, or
wherein the first and second tubes each have an outer diameter of about 5 millimeters and an inner diameter of about 3 millimeters.

5. The system of claim 1, wherein the tube coupler co-axially connects the first and second fiber tubes together in a sealed manner.

6. The system of claim 1, wherein the ferrule assembly includes a ferrule (80) in which the ferrulized end of the optical fiber is adhesively secured, a ferrule hub (86) being mounted to the ferrule, and a ferrule spring (806) being positioned behind the ferrule hub, wherein the ferrule includes a front end (82) and a rear end (84), and wherein the hub is mounted at the rear end of the ferrule, and wherein the front end of the ferrule includes a front-end face at which the optical fiber terminates, and
wherein the ferrule is an SC ferrule having an outer diameter of 2.5 millimeters or an LC ferrule having an outer diameter of 1.25 millimeters.

7. The system of claim 1, further comprising an outer shroud that mounts over the connector body.

8. The system of claim 1, wherein the ferrule assembly includes a ferrule (802), a ferrule hub (804), and a ferrule spring (806), wherein the fiber optic connector includes a rear spring stop (927) that mounts in a core housing (924) of the connector body, wherein the rear spring stop includes an open side (952) extending throughout a length of the rear spring stop for allowing the ferrule assembly to be routed around a stop surface (954) of the rear spring stop while the spring stop is mounted within the core housing and then moved laterally in front of the stop surface of the rear spring stop after the ferrule and ferrule spring have been moved forwardly past the stop surface such that the stop surface opposes a rear end of the ferrule spring to prevent rearward movement of the rear end of the ferrule spring.

9. The system of claim 1, wherein the ferrule assembly includes a ferrule (802), a ferrule hub (804), and a ferrule spring (806), wherein the fiber optic connector includes a rear spring stop (827) that includes retaining arms (842) that flex between a spring retaining position and a ferrule assembly pass-through position, wherein when the retaining arms are in the ferrule assembly pass-through position the ferrule assembly can pass forwardly through the retaining arms, and wherein when the retaining arms are in the spring retaining position the retaining arms are adapted to oppose a rear end of the ferrule spring to prevent rearward movement of the rear end of the ferrule spring,
wherein the rear spring stop is unitarily formed with the connector body, or
wherein the rear spring stop is a separate piece that mounts within the connector body.

10. The system of claim 9, wherein the rear spring stop includes at least one ramp surface (843) for causing the retaining arms to flex from the retaining position to the ferrule assembly pass-through position upon contact with the ferrule assembly as the ferrule assembly is moved forwardly through the connector body.

11. The system of claim 9, wherein the front end of the connector body is defined by a front housing, and wherein a cam arrangement is defined between the front housing and the retaining arms for moving the retaining arms from the retaining position to the ferrule assembly pass-through position by axially moving the front housing along an axis of the connector body relative to the retaining arms.

12. The system of claim 1, wherein the ferrule assembly includes a ferrule (202), a ferrule hub (204), and a ferrule spring (206), wherein the fiber optic connector includes a rear spring stop carried with the connector body that is laterally slidable relative to the connector body between a retaining position and a ferrule assembly pass-through position, wherein when the rear spring stop is in the ferrule assembly pass-through position the ferrule assembly can pass forwardly past the rear spring stop, and wherein when the rear spring stop is in the spring retaining position the rear spring stop is adapted to oppose a rear end of the ferrule spring to prevent rearward movement of the rear end of the ferrule spring, wherein the rear spring stop includes two spring stop members (322, 324) that are carried with the connector body and that are laterally slidable in opposite lateral directions relative to the connector body to move between the retaining position and the ferrule assembly pass-through position.

13. The system of claim 1, wherein the ferrule assembly includes a ferrule (802), a ferrule (804), and a ferrule spring (806), wherein the connector body includes a front housing (922) that defines the front end of the connector body and a core housing (924) that defines the rear end of the connector body, wherein the fiber optic connector includes a rear spring stop (927) at the core housing, and wherein upon assembly the ferrule assembly is captured between the front housing and the rear spring stop,
wherein the rear spring stop is a separate rear spring stop piece that attaches to the core housing,
wherein the rear spring stop piece attaches to the core housing prior to routing the ferrule assembly through the connector body, and wherein the fiber optic connector is configured to allow the ferrule assembly to be routed in a forward direction around the rear spring stop during assembly,
wherein the core housing includes front extensions (981) separated by front side openings (983), and wherein the rear spring stop piece connects to the front extension by a first snap-fit connection,
wherein the front housing includes first and second rear sidewall extensions (975, 976) that are positioned at the front side openings of the core housing when the fiber optic connector is assembled, wherein the first rear sidewall extension connects to the rear spring stop piece by a second snap-fit connection, wherein the front housing includes rear cantilevers (963) arranged in a latching fork configuration for providing a third snap-fit connection, the third snap-fit connection being between the rear spring stop piece and the front housing and being rearwardly located with respect to the second snap-fit connection, the rear cantilevers projecting rearwardly from the second rear sidewall extension,
wherein the rear spring stop piece is an elongate housing that fits within the core housing, the rear spring stop piece defining a spring stop seat and including a longitudinal side opening (952) that extends from a front end of the elongate housing past the spring stop seat through at least a majority of a length of the elongate housing, wherein the longitudinal side opening provides clearance for passing the ferrule assembly forwardly through the core housing and past the spring stop seat during assembly of the fiber optic connector, and wherein the rear cantilevers and the second rear sidewall extension at least partially cover the longitudinal side opening when the front housing is connected to the rear spring stop piece, and
wherein the elongate housing defines a hub pocket (992) for receiving the ferrule and a spring pocket (989) for receiving the ferrule spring.

14. A method for deploying optical fiber (74) through a first fiber tube (28) having a first end (30) and an opposite second end (32), the first fiber tube having been pre-installed underground to provide a fiber routing path between a first location and a second location, the method comprising:
routing an optical fiber (74) through the first fiber tube in a direction from the first end to the second end of the first fiber tube, the optical fiber having a ferrulized end (76) at which a ferrule assembly (78) is secured;
incorporating the ferrule assembly as part of a fiber optic connector (79) after the ferrulized end of the optical fiber has been routed through the first fiber tube, the fiber optic connector including a connector body (36) having a front end (38) and a rear end (40), the fiber optic connector including a second fiber tube (42) that projects rearwardly from the rear end of the connector body, the second fiber tube including a front end (44) anchored and sealed with respect to the connector body and a rear end (46) positioned rearward of the rear end of the connector body, the ferrule assembly being installed within the connector body by inserting the ferrule assembly through the second fiber tube and the connector body in a forward direction extending from the rear end of the connector body toward the front end of the connector body and then securing the ferrule assembly adjacent the front end of the connector body upon insertion of the ferrule assembly forwardly through the second fiber tube and the connector body; and
coupling the second end of the first fiber tube to the rear end of the second fiber tube after the ferrulized end of the optical fiber has been inserted through the second fiber tube, the first and second fiber tubes being coupled together by a tube coupler.

15. The method of claim 14, wherein the optical fiber is blown through the first fiber tube.

## Patentansprüche

1. System zum Einsetzen einer optischen Faser (74) durch ein erstes Faserrohr (28) mit einem ersten Ende (30) und einem gegenüberliegenden zweiten Ende (32), das System umfassend:
eine optische Faser (74) mit einem ferrulisierten Ende (76), an dem eine Ferrulenanordnung (78) befestigt ist, wobei das ferrulisierte Ende so eingerichtet ist, dass es durch das erste Faserrohr in einer Richtung von dem ersten Ende zu dem zweiten Ende des ersten Faserrohrs geführt wird;
einen faseroptischen Verbinder (79), der einen Verbinderkörper (36) mit einem vorderen Ende (38) und einem hinteren Ende (40) umfasst, wobei die Ferrulenanordnung ausgelegt ist, als Teil des faseroptischen Verbinders eingebaut zu werden, nachdem sie durch das erste Faserrohr geführt wurde, **gekennzeichnet dadurch, dass**
der faseroptische Verbinder ein zweites Faserrohr (42) umfasst, das von dem hinteren Ende des Verbinderkörpers nach hinten vorsteht, wobei das zweite Faserrohr ein vorderes Ende (44) umfasst, das in Bezug auf den Verbinderkörper verankert und abgedichtet ist, und ein hinteres Ende (46), das hinter dem hinteren Ende des Verbinderkörpers angeordnet ist, wobei das ferrulisierte Ende der optischen Faser durch das zweite Faserrohr und den Verbinderkörper in einer Vorwärtsrichtung, die sich von dem hinteren Ende des Verbinderkörpers zu dem vorderen Ende des Verbinderkörpers erstreckt, eingeführt werden kann, wobei die Ferrulenanordnung nach dem Einführen der Ferrulenanordnung nach vorne durch das zweite Faserrohr und den Verbinderkörper benachbart zu dem vorderen Ende des Verbinderkörpers montierbar ist; und
einen Rohrkoppler (48) zum Koppeln des zweiten Endes des ersten Faserrohrs mit dem hinteren Ende des zweiten Faserrohrs, nachdem das ferrulisierte Ende der optischen Faser durch das zweite Faserrohr eingeführt wurde.

2. System nach Anspruch 1, wobei das zweite Faserrohr mittels Klebstoff an dem Verbinderkörper befestigt ist; oder
wobei das zweite Faserrohr mittels eines Wärmeschrumpfschlauchs an dem Verbinderkörper befestigt ist.

3. System nach Anspruch 1, wobei das zweite Faserrohr werkseitig an dem Verbinderkörper vorinstalliert ist, bevor der faseroptische Verbinder in dem Feld verwendet wird,
wobei das zweite Faserrohr anfänglich eine erste Länge aufweist und so eingerichtet ist, dass es im Feld vor dem Koppeln des ersten und zweiten Faserrohrs mittels des Rohrkopplers auf eine kürzere zweite Länge zugeschnitten wird,
wobei die zweite Länge so ausgewählt ist, dass sie einem Abstand entspricht, um den das ferrulisierte Ende der optischen Faser über das zweite Ende des ersten Faserrohrs hinausragt, wobei die erste
Länge mindestens 0,25 m beträgt, oder mindestens 0,5 m beträgt, oder mindestens 0,75 m beträgt, oder mindestens 1 m beträgt, oder im Bereich von 0,25 m bis 3 m liegt, oder im Bereich von 0,25 m bis 2 m liegt, oder im Bereich von 0,25 m bis 1 m liegt.

4. System nach Anspruch 1, wobei das erste und das zweite Faserrohr geblasene Faserrohre sind,
wobei das erste und das zweite Rohr jeweils einen Außendurchmesser von etwa 7 mm und einen Innendurchmesser von etwa 4 mm aufweisen, oder
wobei das erste und das zweite Rohr jeweils einen Außendurchmesser von etwa 5 mm und einen Innendurchmesser von etwa 3 mm aufweisen.

5. System nach Anspruch 1, wobei der Rohrkoppler das erste und das zweite Faserrohr koaxial in abgedichteter Weise miteinander verbindet.

6. System nach Anspruch 1, die Ferrulenanordnung umfassend eine Ferrule (80), in der das ferrulisierte Ende der optischen Faser klebend befestigt ist, eine Ferrulennabe (86), die an der Ferrule angebracht ist, und eine Ferrulenfeder (806), die hinter der Ferrulennabe positioniert ist, wobei die Ferrule ein vorderes Ende (82) und ein hinteres Ende (84) aufweist,
und wobei die Nabe an dem hinteren Ende der Ferrule montiert ist, und wobei das vordere Ende der Ferrule eine Stirnfläche umfasst, an der die optische Faser endet, und
wobei die Ferrule eine SC-Ferrule mit einem Außendurchmesser von 2,5 mm oder eine LC-Ferrule mit einem Außendurchmesser von 1,25 mm ist.

7. System nach Anspruch 1, ferner umfassend eine äußere Abdeckung, die über dem Verbinderkörper angebracht ist.

8. System nach Anspruch 1, wobei die Ferrulenanordnung eine Ferrule (802), eine Ferrulennabe (804) und eine Ferrulenfeder (806) umfasst, wobei der faseroptische Verbinder einen hinteren Federanschlag (927) umfasst, der in einem Kerngehäuse (924) des Verbinderkörpers montiert ist, wobei der hintere Federanschlag eine offene Seite (952) umfasst, die sich über eine Länge des hinteren Federanschlags erstreckt, um zu ermöglichen, dass die Ferrulenanordnung um eine Anschlagfläche (954) des hinteren Federanschlags herumgeführt wird, während der Federanschlag innerhalb des Kerngehäuses montiert ist, und anschließend seitlich vor die Anschlagfläche des hinteren Federanschlags bewegt wird, nachdem die Ferrule und die Ferrulenfeder nach vorne über die Anschlagfläche hinaus bewegt wurden, sodass die Anschlagfläche einem hinteren Ende der Ferrulenfeder entgegensteht, um eine rückwärtige Bewegung des hinteren Endes der Ferrulenfeder zu verhindern.

9. System nach Anspruch 1, wobei die Ferrulenanordnung eine Ferrule (802), eine Ferrulennabe (804) und eine Ferrulenfeder (806) umfasst, wobei der faseroptische Verbinder einen hinteren Federanschlag (827) umfasst, der Haltearme (842) umfasst, die zwischen einer Federhalteposition und einer Ferrulenanordnung-Durchgangsposition elastisch auslenkbar sind, wobei, wenn sich die Haltearme in der Ferrulenanordnung-Durchgangsposition befinden, die Ferrulenanordnung nach vorne durch die Haltearme hindurchgeführt werden kann, und wobei, wenn sich die Haltearme in der Federhalteposition befinden, die Haltearme ausgelegt sind, einem hinteren Ende der Ferrulenfeder entgegenzustehen, um eine rückwärtige Bewegung des hinteren Endes der Ferrulenfeder zu verhindern,
wobei der hintere Federanschlag einstückig mit dem Verbinderkörper ausgebildet ist, oder wobei der hintere Federanschlag ein separates Teil ist, das innerhalb des Verbinderkörpers montiert ist.

10. System nach Anspruch 9, wobei der hintere Federanschlag mindestens eine Rampenfläche (843) umfasst, um zu veranlassen, dass sich die Haltearme bei Kontakt mit der Ferrulenanordnung von der Halteposition in die Ferrulenanordnung-Durchgangsposition auslenken, wenn die Ferrulenanordnung nach vorne durch den Verbinderkörper bewegt wird.

11. System nach Anspruch 9, wobei das vordere Ende des Verbinderkörpers durch ein vorderes Gehäuse definiert ist, und wobei zwischen dem vorderen Gehäuse und den Haltearmen eine Nockenanordnung definiert ist, um die Haltearme von der Halteposition in die Ferrulenanordnung-Durchgangsposition zu bewegen, indem das vordere Gehäuse entlang einer Achse des Verbinderkörpers axial relativ zu den Haltearmen bewegt wird.

12. System nach Anspruch 1, wobei die Ferrulenanordnung eine Ferrule (202), eine Ferrulennabe (204) und eine Ferrulenfeder (206) umfasst, wobei der faseroptische Verbinder einen hinteren Federanschlag umfasst, der von dem Verbinderkörper getragen wird, der relativ zu dem Verbinderkörper seitlich zwischen einer Halteposition und einer Ferrulenanordnung-Durchgangsposition verschiebbar ist, wobei, wenn sich der hintere Federanschlag in der Ferrulenanordnung-Durchgangsposition befindet, die Ferrulenanordnung nach vorne an dem hinteren Federanschlag vorbei bewegt werden kann, und wobei, wenn sich der hintere Federanschlag in der Federhalteposition befindet, der hintere Federanschlag ausgelegt ist, einem hinteren Ende der Ferrulenfeder entgegenzustehen, um eine rückwärtige Bewegung des hinteren Endes der Ferrulenfeder zu verhindern,
wobei der hintere Federanschlag zwei Federanschlagelemente (322, 324) umfasst, die von dem Verbinderkörper getragen werden und die relativ zu dem Verbinderkörper seitlich in entgegengesetzten seitlichen Richtungen verschiebbar sind, um sich zwischen der Halteposition und der Ferrulenanordnung-Durchgangsposition zu bewegen.

13. System nach Anspruch 1, wobei die Ferrulenanordnung eine Ferrule (802), eine Ferrulennabe (804) und eine Ferrulenfeder (806) umfasst, wobei der Verbinderkörper ein vorderes Gehäuse (922), welches das vordere Ende des Verbinderkörpers definiert, und ein Kerngehäuse (924), welches das hintere Ende des Verbinderkörpers definiert, umfasst, wobei der faseroptische Verbinder einen hinteren Federanschlag (927) an dem Kerngehäuse umfasst, und wobei bei der Montage die Ferrulenanordnung zwischen dem vorderen Gehäuse und dem hinteren Federanschlag gehalten wird,
wobei der hintere Federanschlag ein separates hinteres Federanschlagstück ist, das an dem Kerngehäuse befestigt ist,
wobei das hintere Federanschlagstück an dem Kerngehäuse befestigt wird, bevor die Ferrulenanordnung durch den Verbinderkörper geführt wird, und wobei der faseroptische Verbinder so eingerichtet ist, dass die Ferrulenanordnung während der Montage in einer Vorwärtsrichtung um den hinteren Federanschlag herum geführt werden kann,
wobei das Kerngehäuse vordere Verlängerungen (981) umfasst, die durch vordere seitliche Öffnungen (983) getrennt sind,
und wobei das hintere Federanschlagstück durch eine erste Schnappverbindung mit der vorderen Verlängerung verbunden ist,
wobei das vordere Gehäuse eine erste und zweite hintere Seitenwandverlängerung (925, 926) umfasst, die an den vorderen seitlichen Öffnungen des Kerngehäuses positioniert sind, wenn der faseroptische Verbinder zusammengebaut ist, wobei die erste hintere Seitenwandverlängerung durch eine zweite Schnappverbindung mit dem hinteren Federanschlagstück verbunden ist, wobei das vordere Gehäuse hintere Ausleger (963) umfasst, die in einer Rastgabelkonfiguration angeordnet sind, um eine dritte Schnappverbindung bereitzustellen, wobei die dritte Schnappverbindung zwischen dem hinteren Federanschlagstück und dem vorderen Gehäuse vorgesehen ist und rückwärtig in Bezug auf die zweite Schnappverbindung angeordnet ist, wobei die hinteren Ausleger rückwärts von der zweiten hinteren Seitenwandverlängerung vorstehen,
wobei das hintere Federanschlagstück ein längliches Gehäuse ist, das in das
Kerngehäuse passt, wobei das hintere Federanschlagstück einen Federanschlagsitz definiert und eine längsseitige Öffnung (952) umfasst, die sich von einem vorderen Ende des länglichen Gehäuses über den Federanschlagsitz hinaus durch mindestens einen Großteil einer Länge des länglichen Gehäuses erstreckt, wobei die längsseitige Öffnung Freiraum zum Vorwärtsführen der Ferrulenanordnung durch das Kerngehäuse und an dem Federanschlagsitz vorbei während der Montage des faseroptischen Verbinders bereitstellt,
und wobei die hinteren Ausleger und die zweite hintere Seitenwandverlängerung die längsseitige Öffnung zumindest teilweise abdecken, wenn das vordere Gehäuse mit dem hinteren Federanschlagstück verbunden ist, und
wobei das längliche Gehäuse eine Nabentasche (992) zum Aufnehmen der Ferrule und eine Federtasche (989) zum Aufnehmen der Ferrulenfeder definiert.

14. Verfahren zum Einsetzen einer optischen Faser (74) durch ein erstes Faserrohr (28) mit einem ersten Ende (30) und einem gegenüberliegenden zweiten Ende (32), wobei das erste Faserrohr unterirdisch vorinstalliert wurde, um einen Faserführungsweg zwischen einem ersten Ort und einem zweiten Ort bereitzustellen, das Verfahren umfassend:
Führen einer optischen Faser (74) durch das erste Faserrohr in einer Richtung von dem ersten Ende zu dem zweiten Ende des ersten Faserrohrs, wobei die optische Faser ein ferrulisiertes Ende (76) aufweist, an dem eine Ferrulenanordnung (78) befestigt ist;
Integrieren der Ferrulenanordnung als Teil eines faseroptischen Verbinders (79), nachdem das ferrulisierte Ende der optischen Faser durch das erste Faserrohr geführt wurde, wobei der faseroptische Verbinder einen Verbinderkörper (36) mit einem vorderen Ende (38) und einem hinteren Ende (40) umfasst, wobei der faseroptische Verbinder ein zweites Faserrohr (42) umfasst, das sich von dem hinteren Ende des Verbinderkörpers nach hinten erstreckt, wobei das zweite Faserrohr ein vorderes Ende (44), das in Bezug auf den Verbinderkörper verankert und abgedichtet ist, und ein hinteres Ende (46), das hinter dem hinteren Ende des Verbinderkörpers angeordnet ist, umfasst, wobei die Ferrulenanordnung innerhalb des Verbinderkörpers installiert wird, indem die Ferrulenanordnung durch das zweite Faserrohr und den Verbinderkörper in einer Vorwärtsrichtung eingesetzt wird, die sich von dem hinteren Ende des Verbinderkörpers zu dem vorderen Ende des Verbinderkörpers erstreckt, und anschließend die Ferrulenanordnung nach dem Vorwärtseinsetzen der Ferrulenanordnung durch das zweite Faserrohr und den Verbinderkörper benachbart zu dem vorderen Ende des Verbinderkörpers befestigt wird; und
Verbinden des zweiten Endes des ersten Faserrohrs mit dem hinteren Ende des zweiten Faserrohrs, nachdem das ferrulisierte Ende der optischen Faser durch das zweite Faserrohr eingeführt wurde, wobei das erste und das zweite Faserrohr durch einen Rohrkoppler miteinander gekoppelt sind.

15. Verfahren nach Anspruch 14, wobei die optische Faser durch das erste Faserrohr geblasen wird.

## Revendications

1. Système pour déployer une fibre optique (74) à travers un premier tube de fibre (28) ayant une première extrémité (30) et une deuxième extrémité (32) opposée, le système comprenant :
une fibre optique (74) ayant une extrémité à virole (76) à laquelle un ensemble virole (78) est arrimé, l'extrémité à virole étant configurée pour être routée à travers le premier tube de fibre dans une direction depuis la première extrémité jusqu'à la deuxième extrémité du premier tube de fibre ;
un connecteur de fibre optique (79.) comportant un corps de connecteur (36.) ayant une extrémité avant (38) et une extrémité arrière (40), l'ensemble virole étant adapté pour être incorporé en tant que partie du connecteur de fibre optique après avoir été routé à travers le premier tube de fibre, **caractérisé par**
le connecteur de fibre optique comportant un deuxième tube de fibre (42) qui fait saillie vers l'arrière à partir de l'extrémité arrière du corps de connecteur, le deuxième tube de fibre comportant une extrémité avant (44) ancrée et scellée par rapport au corps de connecteur et une extrémité arrière (46) positionnée vers l'arrière de l'extrémité arrière du corps de connecteur, l'extrémité à virole de la fibre optique pouvant être insérée à travers le deuxième tube de fibre et le corps de connecteur dans une direction avant s'étendant de l'extrémité arrière du corps de connecteur vers l'extrémité avant du corps de connecteur, l'ensemble virole pouvant être monté adjacent à l'extrémité avant du corps de connecteur lors de l'insertion vers l'avant de l'ensemble virole à travers le deuxième tube de fibre et le corps de connecteur ; et
un coupleur de tubes (48) destiné à coupler la deuxième extrémité du premier tube de fibre à l'extrémité arrière du deuxième tube de fibre après que l'extrémité à virole de la fibre optique a été insérée à travers le deuxième tube de fibre.

2. Système selon la revendication 1, dans lequel le deuxième tube de fibre est arrimé au corps de connecteur par un adhésif ; ou
le deuxième tube de fibre est arrimé au corps de connecteur par un tube thermorétractable.

3. Système selon la revendication 1, dans lequel le deuxième tube de fibre est préinstallé en usine sur le corps de connecteur avant que le connecteur de fibre optique ne soit utilisé sur le terrain,
dans lequel le deuxième tube de fibre comporte initialement une première longueur et est configuré pour être coupé à une deuxième longueur plus courte sur le terrain avant de coupler ensemble les premier et deuxième tubes de fibre au moyen du coupleur de tubes,
dans lequel la deuxième longueur est sélectionnée pour correspondre à une distance sur laquelle l'extrémité à virole de la fibre optique dépasse de la deuxième extrémité du premier tube de fibre, dans lequel la première longueur est d'au moins 0,25 mètre de long, ou est d'au moins 0,5 mètre de long, ou est d'au moins 0,75 mètre de long, ou est d'au moins 1 mètre de long, ou est dans la plage de 0,25 mètre à 3 mètres, ou dans la plage de 0,25 mètre à 2 mètres, ou dans la plage de 0,25 mètre à 1 mètre.

4. Système selon la revendication 1, dans lequel les premier et deuxième tubes de fibres sont des tubes de fibres soufflées,
dans lequel les premier et deuxième tubes ont chacun un diamètre extérieur d'environ 7 millimètres et un diamètre intérieur d'environ 4 millimètres, ou
dans lequel les premier et deuxième tubes ont chacun un diamètre extérieur d'environ 5 millimètres et un diamètre intérieur d'environ 3 millimètres.

5. Système selon la revendication 1, dans lequel le coupleur de tubes relie coaxialement ensemble les premier et deuxième tubes de fibre de manière étanche.

6. Système selon la revendication 1, dans lequel l'ensemble virole comprend une virole (80) dans laquelle l'extrémité à virole de la fibre optique est arrimée à l'aide d'un adhésif, un collet de virole (86) étant monté sur la virole, et un ressort de virole (806) étant positionné derrière le collet de virole, dans lequel la virole comporte une extrémité avant (82) et une extrémité arrière (84),
et dans lequel le collet est monté au niveau de l'extrémité arrière de la virole, et dans lequel l'extrémité avant de la virole comporte une face d'extrémité avant au niveau de laquelle la fibre optique se termine, et
dans lequel la virole est une virole SC ayant un diamètre extérieur de 2,5 millimètres ou une virole LC ayant un diamètre extérieur de 1,25 millimètre.

7. Système selon la revendication 1, comprenant en outre une enveloppe extérieure qui est montée sur le corps de connecteur.

8. Système selon la revendication 1, dans lequel l'ensemble virole comporte une virole (802), un collet de virole (804) et un ressort de virole (806), dans lequel le connecteur de fibre optique comporte une butée de ressort arrière (927) montée dans un boîtier central (924) du corps de connecteur, dans lequel la butée de ressort arrière comporte un côté ouvert (952) s'étendant sur toute une longueur de la butée de ressort arrière pour permettre à l'ensemble virole d'être routé autour d'une surface de butée (954) de la butée de ressort arrière pendant que la butée de ressort est montée au sein du boîtier central, puis déplacé latéralement devant la surface de butée de la butée de ressort arrière après que la virole et le ressort de virole ont été déplacés vers l'avant au-delà de la surface de butée de telle sorte que la surface de butée s'oppose à une extrémité arrière du ressort de virole afin d'empêcher un mouvement vers l'arrière de l'extrémité arrière du ressort de virole.

9. Système selon la revendication 1, dans lequel l'ensemble virole comporte une virole (802), un collet de virole (804) et un ressort de virole (806), dans lequel le connecteur de fibre optique comporte une butée de ressort arrière (827) qui comporte des bras de retenue (842) qui fléchissent entre une position de retenue de ressort et une position de passage de l'ensemble virole, dans lequel, lorsque les bras de retenue sont dans la position de passage de l'ensemble virole, l'ensemble virole peut passer vers l'avant à travers les bras de retenue, et dans lequel, lorsque les bras de retenue sont dans la position de retenue de ressort, les bras de retenue sont adaptés pour s'opposer à une extrémité arrière du ressort de virole afin d'empêcher un mouvement vers l'arrière de l'extrémité arrière du ressort de virole,
dans lequel la butée de ressort arrière est formée d'une seule pièce avec le corps de connecteur, ou
dans lequel la butée de ressort arrière est une pièce séparée qui se monte au sein du corps de connecteur.

10. Système selon la revendication 9, dans lequel la butée de ressort arrière comporte au moins une surface de rampe (843) pour amener les bras de retenue à fléchir de la position de retenue à la position de passage de l'ensemble virole au contact avec l'ensemble virole lorsque l'ensemble virole est déplacé vers l'avant à travers le corps de connecteur.

11. Système selon la revendication 9, dans lequel l'extrémité avant du corps de connecteur est définie par un boîtier avant, et dans lequel un agencement de came est défini entre le boîtier avant et les bras de retenue pour déplacer les bras de retenue de la position de retenue à la position de passage de l'ensemble virole en déplaçant axialement le boîtier avant le long d'un axe du corps de connecteur par rapport aux bras de retenue.

12. Système selon la revendication 1, dans lequel l'ensemble virole comporte une virole (202), un collet de virole (204) et un ressort de virole (206), dans lequel le connecteur de fibre optique comporte une butée de ressort arrière portée par le corps de connecteur, qui peut coulisser latéralement par rapport au corps de connecteur entre une position de retenue et une position de passage de l'ensemble virole, dans lequel, lorsque la butée de ressort arrière est dans la position de passage de l'ensemble virole, l'ensemble virole peut passer vers l'avant au-delà de la butée de ressort arrière, et dans lequel, lorsque la butée de ressort arrière est dans la position de retenue de ressort, la butée de ressort arrière est adaptée pour s'opposer à une extrémité arrière du ressort de virole afin d'empêcher un mouvement vers l'arrière de l'extrémité arrière du ressort de virole,
dans lequel la butée de ressort arrière comporte deux organes de butée de ressort (322, 324) qui sont portés par le corps de connecteur et qui peuvent coulisser latéralement dans des directions latérales opposées par rapport au corps de connecteur pour se déplacer entre la position de retenue et la position de passage de l'ensemble virole.

13. Système selon la revendication 1, dans lequel l'ensemble virole comporte une virole (802), un collet de virole (804) et un ressort de virole (806), dans lequel le corps de connecteur comporte un boîtier avant (922) qui définit l'extrémité avant du corps de connecteur et un boîtier central (924) qui définit l'extrémité arrière du corps de connecteur, dans lequel le connecteur de fibre optique comporte une butée de ressort arrière (927) au niveau du boîtier central, et dans lequel, lors de l'assemblage, l'ensemble virole est capturé entre le boîtier avant et la butée de ressort arrière,
dans lequel la butée de ressort arrière est une pièce de butée de ressort arrière séparée qui se fixe au boîtier central,
dans lequel la pièce de butée de ressort arrière se fixe au boîtier central avant le routage de l'ensemble virole à travers le corps de connecteur, et dans lequel le connecteur de fibre optique est configuré pour permettre à l'ensemble virole d'être routé dans une direction vers l'avant autour de la butée de ressort arrière pendant l'assemblage,
dans lequel le boîtier central comporte des extensions avant (981) séparées par des ouvertures latérales avant (983),
et dans lequel la pièce de butée de ressort arrière se connecte à l'extension avant par une première connexion à encliquetage,
dans lequel le boîtier avant comporte des première et deuxième extensions de paroi latérale arrière (925, 926) qui sont positionnées au niveau des ouvertures latérales avant du boîtier central lorsque le connecteur de fibre optique est assemblé, dans lequel la première extension de paroi latérale arrière se connecte à la pièce de butée de ressort arrière par une deuxième connexion à encliquetage, dans lequel le boîtier avant comporte des cantilevers arrière (963) agencés dans une configuration de fourche de verrouillage pour fournir une troisième connexion à encliquetage, la troisième connexion à encliquetage étant entre la pièce de butée de ressort arrière et le boîtier avant et étant située vers l'arrière par rapport à la deuxième connexion à encliquetage, les cantilevers arrière faisant saillie vers l'arrière à partir de la deuxième extension de paroi latérale arrière,
dans lequel la pièce de butée de ressort arrière est un boîtier allongé qui s'adapte au sein du boîtier central, la pièce de butée de ressort arrière définissant un siège de butée de ressort et comportant une ouverture latérale longitudinale (952) qui s'étend depuis une extrémité avant du boîtier allongé au-delà du siège de butée de ressort sur au moins une majorité de la longueur du boîtier allongé, dans lequel l'ouverture latérale longitudinale fournit un dégagement permettant de faire passer l'ensemble virole vers l'avant à travers le boîtier central et au-delà du siège de butée de ressort pendant l'assemblage du connecteur de fibre optique,
et dans lequel les cantilevers arrière et la deuxième extension de paroi latérale arrière recouvrent au moins partiellement l'ouverture latérale longitudinale lorsque le boîtier avant est connecté à la pièce de butée de ressort arrière, et
dans lequel le boîtier allongé définit une poche de collet (992) destinée à recevoir la virole et une poche de ressort (989) destinée à recevoir le ressort de virole.

14. Procédé pour déployer une fibre optique (74) à travers un premier tube de fibre (28) ayant une première extrémité (30) et une deuxième extrémité (32) opposée, le premier tube de fibre ayant été préinstallé sous terre pour fournir un trajet de routage de fibres entre un premier emplacement et un deuxième emplacement, le procédé comprenant :
le routage d'une fibre optique (74) à travers le premier tube de fibre dans une direction depuis la première extrémité jusqu'à la deuxième extrémité du premier tube de fibre, la fibre optique ayant une extrémité à virole (76) à laquelle un ensemble virole (78) est arrimé ;
l'incorporation de l'ensemble virole en tant que partie d'un connecteur de fibre optique (79) après que l'extrémité à virole de la fibre optique a été routée à travers le premier tube de fibre, le connecteur de fibre optique comportant un corps de connecteur (36) ayant une extrémité avant (38) et une extrémité arrière (40), le connecteur de fibre optique comportant un deuxième tube de fibre (42) qui fait saillie vers l'arrière à partir de l'extrémité arrière du corps de connecteur, le deuxième tube de fibre comportant une extrémité avant (44) ancrée et scellée par rapport au corps de connecteur et une extrémité arrière (46) positionnée vers l'arrière de l'extrémité arrière du corps de connecteur, l'ensemble virole étant installé au sein du corps de connecteur en insérant l'ensemble virole à travers le deuxième tube de fibre et le corps de connecteur dans une direction vers l'avant s'étendant de l'extrémité arrière du corps de connecteur vers l'extrémité avant du corps de connecteur, puis en arrimant l'ensemble virole adjacent à l'extrémité avant du corps de connecteur lors de l'insertion de l'ensemble virole vers l'avant à travers le deuxième tube de fibre et le corps de connecteur ; et
le couplage de la deuxième extrémité du premier tube de fibre à l'extrémité arrière du deuxième tube de fibre après que l'extrémité à virole de la fibre optique a été insérée à travers le deuxième tube de fibre, les premier et deuxième tubes de fibre étant couplés ensemble par un coupleur de tubes.

15. Procédé selon la revendication 14, dans lequel la fibre optique est soufflée à travers le premier tube de fibre.
